# EUROPEAN PATENT SPECIFICATION

(11) **EP 3 796 295 B1**
(45) Date of publication and mention of the grant of the patent: **08.05.2024**
(21) Application number: 20180509.0
(22) Date of filing: 17.06.2020
(51) Int. Cl.: B60K 35/00, B60K 37/02, G01D 7/06, G09G 3/04

(54) **DISPLAY DEVICE, AND A STRADDLED VEHICLE WITH THE DISPLAY DEVICE**
ANZEIGEVORRICHTUNG UND GRÄTSCHSITZFAHRZEUG MIT DER ANZEIGEVORRICHTUNG
DISPOSITIF D'AFFICHAGE ET VÉHICULE À SELLE COMPRENANT LE DISPOSITIF D'AFFICHAGE

(30) Priority: 18.09.2019 JP 2019169279
(43) Date of publication of application: 24.03.2021
(73) Proprietor: Yamaha Hatsudoki Kabushiki Kaisha, Iwata-shi, Shizuoka-ken 438-8501 (JP)
(72) Inventor: KIMURA, Yusuke, Shizuoka, 438-8501 (JP); KUROSU, Hirotoshi, Shizuoka, 438-8501 (JP); ITO, Eita, Shizuoka, 438-8501 (JP)
(74) Representative: Marks & Clerk LLP

(56) References cited:
- US-A- 4 968 930
- US-A1- 2014 125 475

## Description

### FIELD OF INVENTION

This invention relates to a display device, and to a straddled vehicle with or having a/the display device.

### BACKGROUND TO INVENTION

Japanese Unexamined Patent Publication No. 2015-85853 discloses a motorcycle. In the following description, the reference signs used in Japanese Unexamined Patent Publication No. 2015-85853 will be given in parentheses. The motorcycle (1) includes a display device (16). The display device (16) has a screen (16a). The screen (16a) displays images in dot matrix system. The screen (16a) can display the images in color.

The screen (16a) displays a basic screen in track mode. The basic screen in track mode includes an engine rotation speed indicator (22). The engine rotation speed indicator (22) includes an indicating portion (22a) and a scale mark bar (22b). The scale mark bar (22b) displays a scale. The scale has a minimum value "8". That is, the lower limit of the engine rotation speed displayed by the engine rotation speed indicator (22) is 8000 [rpm].

The screen (16a) can display a basic screen in street mode instead of the basic screen in track mode. The basic screen in street mode also includes an engine rotation speed indicator. A minimum value of the scale in street mode is smaller than the minimum value of the scale in track mode.

Since the display method of the display device (16) is a dot matrix system, the screen (16a) has a plurality of dots arranged in a lattice pattern. The dots are also called pixels. The display device (16) displays each dot individually. This makes the construction of the screen (16a) complicated. The display device (16) is, therefore, expensive. As a result, it is difficult to hold down the cost of motorcycle (1).

This invention has been made having regard to the state of the art noted above. At least one object of at least one embodiment of at least one aspect of the present invention is to provide an inexpensive display device which can display vehicle information in a plurality of modes, and a straddled vehicle with such display device.

Inventors herein have made research on a liquid crystal screens of other display methods or liquid crystal screens of other liquid crystal drive methods, as replacement for the liquid crystal screen of dot matrix system.

The Inventors herein reviewed employing a TFT liquid crystal screen. The liquid crystal screen has numerous thin film transistors (TFT) provided for the respective dots. The TFT liquid crystal screen is also expensive. That is, it is difficult to hold down the cost of the TFT liquid crystal screen.

Then, the Inventors herein reviewed employing a liquid crystal screen of segment system. The liquid crystal screen of segment system has a plurality of segments which can switch between a display state and a non-display state. One segment is much larger than one dot. The number of segments included in the liquid crystal screen of segment system is far smaller the number of dots included in the liquid crystal screen of dot matrix system. Further, there is no need to arrange the plurality of segments in a lattice pattern. Consequently, the construction of the liquid crystal screen of segment system is simpler than the construction of the liquid crystal screen of dot matrix system. The liquid crystal screen of segment system is, therefore, less expensive than the liquid crystal screen of dot matrix system. However, the liquid crystal screen of segment system cannot display various images compared with the liquid crystal screen of dot matrix system.

Further, the smaller number of segments included in the liquid crystal screen makes the less cost of the liquid crystal screen. With this point in mind, the Inventors herein have made further research on reducing the number of segments included in the liquid crystal screen.

It is an object of at least one embodiment of at least one aspect of the present invention to seek to obviate or at least mitigate one or more problems and/or disadvantages in the prior art.

US 2014/125475 A1 (YASUHARA ET AL) describes a meter display device for a vehicle including a rotation number display region which displays a rotation number of a drive source, wherein the rotation number display region is divided into a plurality of partial display regions having different rotation number ranges displayed, wherein the partial display regions have display operation elements which are changed between the minimum and maximum values of the respective corresponding partial rotation number ranges with the increase and decrease of the rotation number, wherein the partial display regions are separated from each other.

US 4968930 A (GRUPP ET AL) describes a device for displaying the value of a quantity represented by input data including a mobile indicator member driven by a stepping motor, a control circuit for this motor for delivering drive pulses to the motor in response to the input data to move the indicator member to a position corresponding to the value of the quantity, and a dial for showing an indexing system, for example a scale, which cooperates with the indicator member to indicate the value at least approximately. The dial includes a liquid crystal, electrochromic or electroluminescent electrooptical display device which displays the indexing system in response to signals from another control circuit when the latter receives an activation signal. The device enables values of a single quantity situated in different ranges or values of distinct quantities to be indicated, by making the cell selectively display corresponding indexing systems. A specific application of the device is for automobile dashboards.

### SUMMARY OF INVENTION

According to the present invention there is provided a display device and/or a straddled vehicle with or having a display device as claimed in the appended claims.

According to a first aspect of the present invention there is provided a display device, for use on a straddled vehicle, the device comprising a liquid crystal screen, wherein:
the liquid crystal screen comprises:
   a scale area for displaying a plurality of main scale marks, for example to be recognizable;
   a number area for displaying scale numbers; and
   a vehicle information area for displaying, for along the main scale marks, vehicle information concerning a state or states of the straddled vehicle;
the liquid crystal screen being capable of displaying the main scale marks, the scale numbers, and the vehicle information as switched between a first mode and a second mode, respectively;
the number of main scale marks displayed in the first mode being larger than the number of main scale marks displayed in the second mode;
the scale area in the second mode may comprising a part of longer distance between the main scale marks than in the scale area in the first mode;
the number area in the first mode displaying the scale numbers in positions corresponding to at least two of the main scale marks displayed in the scale area in the first mode, and in the second mode displaying the scale numbers in positions corresponding to at least two of the main scale marks displayed in the scale area in the second mode;
the vehicle information area in the first mode displaying the vehicle information with reference to the main scale marks displayed in the scale area and the scale numbers displayed in the number area in the first mode, and in the second mode displaying the vehicle information with reference to the main scale marks displayed in the scale area and the scale numbers displayed in the number area in the second mode;
the number area may comprising a plurality of number segments switchable between a display state and a non-display state;
the number area displaying the scale numbers by means of the number segments;
the number area comprising a common number area for displaying the scale numbers in the same positions in both the first mode and the second mode;
the common number area comprising at least three variable areas for switching between, and displaying, the scale numbers in the first mode, and the scale numbers in the second mode, different from one another but in the same positions;
at least one of the variable areas being a first variable area for switching between, and displaying, the scale numbers in the first mode, and the scale numbers in the second mode, different from one another but in the same position by means of three number segments; and
at least one of the variable areas excluding the first variable area being a second variable area for switching between, and displaying, the scale numbers in the first mode, and the scale numbers in the second mode, different from one another but in the same position, by means of two number segments;
   wherein
each of the variable areas comprises, as the number segments:
   one common number segment; and
   at least one of one first number segment and one second number segment;
   the common number segment being located in a common part of a first scale number which is a scale number displayed in the variable area in the first mode and a second scale number which is a scale number displayed in the variable area in the second mode, the common number segment being in the display state in both the first mode and the second mode;
   the first number segment being located in a first part included in the first scale number and not included in the second scale number, the first number segment being in the display state in the first mode and in the non-display state in the second mode; and
   the second number segment being located in a second part included in the second scale number and not included in the first scale number, the second number segment being in the display state in the second mode and in the non-display state in the first mode; and
   the common number area (82) comprises two or more constant areas (84) for displaying the same scale numbers (88) in the same position in both the first mode and the second mode, the constant areas (84) displaying the scale numbers (88) in both the first mode and the second mode by means of one number segment (111).

Here, the phrase "displays ... to be recognizable" may refer to putting the areas in which the main scale marks are located in the display state, or putting the areas in which the main scale marks are located in the non-display state. When the areas in which the main scale marks are located are put in the non-display state, the main scale marks can be displayed to be recognizable by making the areas in which the main scale marks are located adjoin areas in the display state. Thus, whether the areas in which the main scale marks are located are in the display state or in the non-display state, the main scale marks can be displayed to be recognizable.

The display device can display the vehicle information in a plurality of modes, and yet is inexpensive. As described above, there is relatively few number segments used in the first variable area and there will be still fewer number segments used in the second variable area. The display device can, therefore, be constructed at relatively low cost.

The number of number segments that each of the two or more constant areas uses may be one. Thus, fewer number segments may be used in each constant area. The display device can, therefore, be constructed at further reduced cost.

Each variable area may switch and display the first scale number and second scale number in the same position. Here, the first scale number and the second scale number may be different. Specifically, the first scale number and the second scale number may be formed of common parts and at least one of first parts and second parts. For example, the first scale number may be formed of only common parts or common parts and first parts. For example, the second scale number may be formed of only common parts or common parts and second parts. However, when the first scale number is formed of only common parts, the second scale number may include second parts. When the second scale number is formed of only common parts, the first scale number may include first parts. Depending on the difference between the first scale number and the second scale number, the variable area may have common number segments and first number segments, or may have common number segments and second number segments, or may have common number segments, first number segments, and second number segments. In any case, each variable area can conveniently switch and display the first scale number and second scale number by means of common number segments and at least one of first number segments and second number segments. That is, the number of number segments each variable area uses can be held down to three or less.

In the above display device, it may be preferred that a minimum of the scale numbers displayed in the second mode may be larger than a minimum of the scale numbers displayed in the first mode.

The minimum of the scale number may vary between the first mode and the second mode. That is, the lower limit of a numerical range provided by the main scale marks and scale numbers may vary between the first mode and the second mode. The vehicle information can, therefore, be displayed in different numerical ranges by switching between the first mode and the second mode.

In the above display device, it is preferred that the scale area has a plurality of scale mark segments switchable between the display state and the non-display state; the scale area displaying the main scale marks to be recognizable by means of the scale mark segments. This may allow the display device to be constructed at further reduced cost.

In the above display device, it may be preferred that:
the scale area further may display a plurality of auxiliary scale marks;
the scale area may be capable of displaying the auxiliary scale marks to be switchable between the first mode and the second mode; and
the number of the auxiliary scale marks displayed in the first mode may be smaller than the number of the auxiliary scale marks displayed in the second mode.

The number of auxiliary scale marks may vary between the first mode and the second mode. That is, the array of the auxiliary scale marks may vary between the first mode and the second mode. The vehicle information can, therefore, be displayed on different scales by switching between the first mode and the second mode.

In the above display device, it may be preferred that:
the number of the auxiliary scale marks located between two adjacent main scale marks in the first mode may be a divisor of 1000; and
the number of the auxiliary scale marks located between two adjacent main scale marks in the second mode may be a divisor of 1000.

With this construction, the user of the display device can accurately and easily grasp a value or quantity meant by each auxiliary scale mark in the first mode. Similarly, the user can accurately and easily grasp a value and quantity meant by each auxiliary scale mark in the second mode.

In the above display device, it may be preferred that:
the scale area displays auxiliary scale rows, each of which may be a set of at least two auxiliary scale marks arranged at equal intervals in a row; and
at least two of the main scale marks which may be located in positions adjoining ends of the auxiliary scale row.

The main scale marks and auxiliary scale rows can, therefore, be placed close to each other conveniently. This may enable the user to see easily both the main scale marks and auxiliary scale rows.

In the above display device, it may be preferred that:
the auxiliary scale marks may be located in areas in the display state; and/or
the main scale marks may be located in areas in the non-display state.

At least two main scale marks may be located in positions adjoining the ends of the auxiliary scale row. The auxiliary scale marks may be located at the ends of each auxiliary scale row. Consequently, at least two main scale marks may be located in positions adjoining the auxiliary scale marks. The areas in which the main scale marks are located may be in the non-display state, and/or the areas in which the auxiliary scale marks are located may be in the display state. Thus, since the areas in which the main scale marks may be located are in the non-display state, and the areas in which the main scale marks may be located adjoin the areas in the display state, the main scale marks may be displayed recognizably.

In the above display device, it may be preferred that:
the main scale marks comprise or include:
   one first main scale mark which may be displayed to be recognizable in the first mode and the second mode;
   one second main scale mark which may be displayed to be recognizable in the first mode, and not displayed to be recognizable in the second mode; and
   one third main scale mark which may be displayed to be recognizable in the first mode and the second mode;
the auxiliary scale marks comprise or include:
   at least one first auxiliary scale mark which may be displayed in the first mode and the second mode;
   at least one second auxiliary scale mark which may not be displayed in the first mode, but which may be displayed in the second mode;
   at least one third auxiliary scale mark which may be displayed in the first mode and the second mode;
in the first mode, the first main scale mark, the first auxiliary scale mark, the second main scale mark, the third auxiliary scale mark, and the third main scale mark may be arranged in this order;
in the second mode, the first main scale mark, the first auxiliary scale mark, the second auxiliary scale mark, the third auxiliary scale mark, and the third main scale mark may be arranged in this order;
the number of the first auxiliary scale marks may be a divisor of 1000;
the number of the third auxiliary scale marks may be a divisor of 1000; and
a sum total of the number of the first auxiliary scale mark, the number of the second auxiliary scale mark, and the number of the third auxiliary scale mark may be a divisor of 1000.

In the first mode, the first main scale mark and second main scale mark may be displayed to be recognizable, with the first auxiliary scale mark displayed between the first main scale mark and second main scale mark. The number of first auxiliary scale mark may be a divisor of 1000. The user can, therefore, grasp accurately and easily a value or quantity meant by the first auxiliary scale mark in the first mode. In the first mode, the second main scale mark and third main scale mark may be displayed to be recognizable, with the third auxiliary scale mark displayed between the second main scale mark and third main scale mark. The number of third auxiliary scale mark may be a divisor of 1000. The user can, therefore, grasp accurately and easily a value or quantity meant by the third auxiliary scale mark in the first mode. In the second mode, the first main scale mark and third main scale mark may be displayed to be recognizable, with the first auxiliary scale mark, second auxiliary scale mark, and third auxiliary scale mark displayed between the first main scale mark and third main scale mark. The sum total of the number of first auxiliary scale mark, the number of second auxiliary scale mark, and the number of third auxiliary scale mark may be a divisor of 1000. That is, the number of auxiliary scale marks displayed between the first main scale mark and third main scale mark in the second mode may be a divisor of 1000. The user can, therefore, grasp accurately and easily values or quantities meant by the first auxiliary scale mark, second auxiliary scale mark, and third auxiliary scale mark in the second mode.

In the above display device, it may be preferred that the number of the second auxiliary scale mark is one.

The number of the second auxiliary scale mark may be small/smaller. This can simplify the construction of the scale area.

In the above display device, it may be preferred that:
the number of the first auxiliary scale mark may be one of four and five; and
the number of the third auxiliary scale mark may be the other of four and five.

For example, the number of the first auxiliary scale mark may be four, and the number of the third auxiliary scale mark may be five. Alternatively, the number of the first auxiliary scale mark may be five, and the number of the third auxiliary scale mark may be four. The number of the second auxiliary scale mark may be one. In any case, therefore, the total of the number of first auxiliary scale mark, the number of the second auxiliary scale mark, and the number of the third auxiliary scale mark may be 10. Here, 4 is a devisor of 1000; 5 is a divisor of 1000; 10 is a divisor of 1000. The user can, therefore, accurately and easily grasp values or quantities meant by the first auxiliary scale mark and third auxiliary scale mark in the first mode. Further, the user can accurately and easily grasp values or quantities meant by the first auxiliary scale mark, second auxiliary scale mark, and third auxiliary scale mark in the second mode.

In the above display device, it may be preferred that:
the scale area comprises or includes:
   one first scale mark segment located in position of the first auxiliary scale mark to be switchable between the display state and the non-display state;
   one second scale mark segment located in a position of the second auxiliary scale mark to be switchable between the display state and the non-display state; and
   one third scale mark segment located in the position of the third auxiliary scale mark to be switchable between the display state and the non-display state;
the scale area optionally displaying the first main scale mark, the second main scale mark, and the third main scale mark to be recognizable by means of the first scale mark segment, the second scale mark segment, and the third scale mark segment.

Since the first scale mark segment may be located in the position of the first auxiliary scale mark, the first scale mark segment can conveniently display the first auxiliary scale mark. Similarly, since the second and third scale mark segments may be located in the positions of the second and third auxiliary scale marks, the second and third scale mark segments can conveniently display the second and third auxiliary scale marks. Further, the scale area may display the first, second, and third main scale marks to be recognizable by means of the first, second, and third scale mark segments. Consequently, the number of the scale mark segments used to display the first main scale mark, second main scale mark, third main scale mark, first auxiliary scale mark, second auxiliary scale mark, and third auxiliary scale mark may be three (which are relatively few). The display device can, therefore, be constructed at further reduced cost.

In the above display device, it may be preferred that the vehicle information is information concerning rotation speed of an engine of the straddled vehicle. With this construction, the display device can display rotation speed of the engine in a plurality of mode(s).

According to a second aspect of the present invention there is provided a straddled vehicle comprising a display device according to the first aspect of the present invention.

The display device displays the vehicle information in a plurality of modes, and may be relatively inexpensive. This can hold down or reduce the cost of the straddled vehicle.

### BRIEF DESCRIPTION OF DRAWINGS

For the purpose of illustrating the present invention, there are shown in the drawings several forms which are presently preferred, it being understood, however, that the invention is not limited to the precise arrangement and/or instrumentalities shown. The drawings show:
- **Fig. 1**: a left side view of a straddled vehicle according to an
- embodiment: of the present invention;
- **Fig. 2**: a perspective view seen from direction Q in Fig. 1;
- **Fig. 3**: a front view of a display device;
- **Fig. 4**: a view showing a construction of the display device;
- **Fig. 5**: a view showing a liquid crystal screen in street mode;
- **Fig. 6**: a view showing a liquid crystal screen in track mode;
- **Fig. 7A**: a view showing a scale area in street mode;
- **Fig. 7B**: a view showing a scale area in track mode;
- **Fig. 8A**: a detailed view showing part of the scale area in street mode;
- **Fig. 8B**: a detailed view showing part of the scale area in track mode;
- **Fig. 9**: a schematic view showing display control of the scale area;
- **Fig. 10**: a schematic view showing display control of a number area; and
- **Fig. 11**: a view schematically showing a relationship between scale numbers displayed in a variable area and number segments.

### DETAILED DESCRIPTION OF DRAWINGS

A straddled vehicle 1 according to this invention will be described hereinafter with reference to the drawings.

### 1. Outline Construction of Straddled Vehicle 1

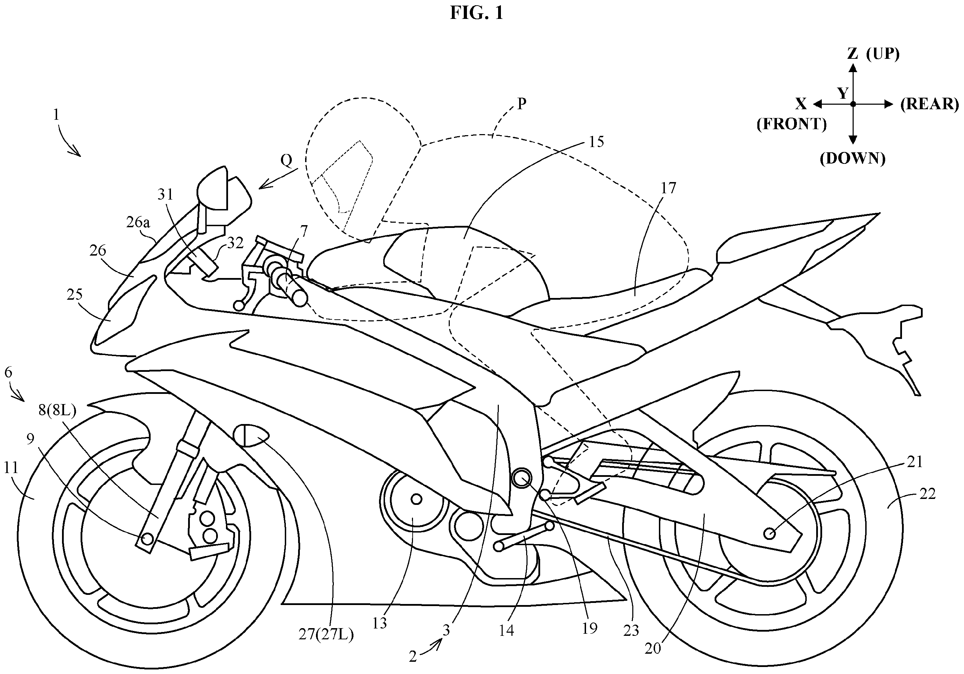

Fig. 1 is a left side view of a straddled vehicle according to an embodiment.

The straddled vehicle 1 is a street type vehicle. A driver (also called a rider) P mounts the straddled vehicle 1 and drives the straddled vehicle 1.

Fig. 1 shows a longitudinal direction X, a transverse direction Y, and an up-down direction Z of the straddled vehicle 1. The longitudinal direction X, transverse direction Y, and up-down direction Z are defined with reference to the driver P mounted on the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver P mounted on the straddled vehicle 1. Unless otherwise stated in this specification, "forward" and "rearward" include not only directions parallel to the longitudinal direction X but also directions approximate to the longitudinal direction X. The directions approximate to the longitudinal direction X are, for example, directions at angles not exceeding 45 degrees to the longitudinal direction X. Similarly, unless otherwise stated, "rightward" and "leftward" include not only directions parallel to the transverse direction Y but also directions approximate to the transverse direction Y. Unless otherwise stated, "upward" and "downward" include not only directions parallel to the up-down direction Z but also directions approximate to the up-down direction Z. For reference, the drawings show front, rear, up, down, right, and left, as appropriate.

This specification uses various expressions describing arrangements, which have the following meanings, respectively. The following description will be made taking the transverse direction Y for example, and the same may be applied to the longitudinal direction X and up-down direction Z.

The expression "Member A is located more rightward/leftward than member B," defines a position in the transverse direction Y of member A relative to member B, and does not define a position in the longitudinal direction X or the up-down direction Z of member A relative to member B. In the case of this expression, member A may, or may not, overlap member B in a side view of the vehicle.

The expression "Member A is located rightward/leftward of member B," without reference to a looking direction defines a position in the transverse direction Y of member A relative to member B, a position in the longitudinal direction X of member A relative to member B, and a position in the up-down direction Z of member A relative to member B. This expression means that member A is located more rightward/leftward than member B, and that at least part of member A overlaps at least part of member B in a side view of the vehicle.

The expression "Member A is located rightward/leftward of member B in a plan view of the vehicle," defines a position in the transverse direction Y of member A relative to member B, and a position in the longitudinal direction X of member A relative to member B, and does not define a position in the up-down direction Z of member A relative to member B. This expression means that member A is located more rightward/leftward than member B, and that the front end of member A is located more forward than the rear end of member B, and that the rear end of member A is located more rearward than the front end of member B.

The expression "Member A is located rightward/leftward of member B in a front view of the vehicle," defines a position in the transverse direction Y of member A relative to member B, and a position in the up-down direction Z of member A relative to member B, and does not define a position in the longitudinal direction X of member A relative to member B. This expression means that: member A is located more rightward/leftward than member B, the upper end of member A is located higher than the lower end of member B, and the lower end of member A is located lower than the upper end of member B.

The straddled vehicle 1 includes a body frame 2 and a steering device 6. The body frame 2 extends in the longitudinal direction X. The steering device 6 is supported by a front of the body frame 2. The steering device 6 is rotatable relative to the body frame 2.

The steering device 6 has a handle 7, a front suspension 8, and a front axle 9. The handle 7 is disposed in an upper portion of the steering device 6. The front suspension 8 extends downward from the handle 7. The front axle 9 is disposed in a lower portion of the steering device 6. The front axle 9 is supported by the front suspension 8. The driver P of the straddled vehicle 1 grasps the handle 7 and controls the steering device 6.

The straddled vehicle 1 includes a front wheel 11. The front wheel 11 is supported by the steering device 6. Specifically, the front wheel 11 is supported by the front axle 9. The front wheel 11 is rotatable about the front axle 9.

The body frame 2 includes a main frame 3. The main frame 3 extends rearward from the front of the body frame 2. More particularly, the main frame 3 extends rearward and downward in a side view of the vehicle.

The straddled vehicle 1 has an engine 13. The engine 13 generates power for running the straddled vehicle 1. The engine 13 is a water-cooled engine which uses a cooling liquid. At least part of the engine 13 is located below the main frame 3 in the side view of the vehicle. The engine 13 is located behind the steering device 6 and front wheel 11 in the side view of the vehicle. The engine 13 is supported by the body frame 2. For example, the engine 13 is supported by the main frame 3. The engine 13 is fixed to the body frame 2. The engine 13 is not swingable relative to the body frame 2.

The straddled vehicle 1 has a transmission not shown. The transmission is disposed behind the engine 13, for example. The power generated by the engine 13 is inputted to the transmission. The transmission has a plurality of gears. The transmission is constructed switchable to one of a plurality of change gear ratios. The transmission changes rotation speed of the power inputted to the transmission by a selected change gear ratio. In this specification, the change gear ratio is called a gear position as appropriate.

The straddled vehicle 1 has a shift pedal 14. The shift pedal 14 is operated by the driver P. In response to operation of the shift pedal 14, the transmission switches the gear position.

The straddled vehicle 1 has a fuel tank 15. The fuel tank 15 stores fuel. The fuel tank 15 is located behind the steering device 6 and front wheel 11 in the side view of the vehicle. The fuel tank 15 is located above the engine 13 in the side view of the vehicle. At least part of the fuel tank 15 is located above the main frame 3 in the side view of the vehicle. At least part of the fuel tank 15 is located in the same height position as the handle 7 in the side view of the vehicle. The fuel tank 15 is supported by the body frame 2.

The straddled vehicle 1 has a seat 17. The seat 17 is located behind the fuel tank 15. At least part of the seat 17 is located in the same height position as the fuel tank 15 in the side view of the vehicle. The seat 17 is located behind and above the engine 13. The seat 17 is supported by the body frame 2.

The driver P sits straddling the seat 17, and puts on a knee grip. The knee grip is a holding of part of the straddled vehicle 1 between the legs of the driver P. The part of the straddled vehicle 1 is at least part of the main frame 3 and fuel tank 15, for example.

The straddled vehicle 1 has a pivot shaft 19, a swing arm 20, a rear axle 21, and a rear wheel 22. The pivot shaft 19 is disposed behind the engine 13 and fuel tank 15. The pivot shaft 19 is located below the fuel tank 15 and seat 17. The pivot shaft 19 is supported by the body frame 2. The swing arm 20 is supported by the pivot shaft 19. The swing arm 20 extends rearward from the pivot shaft 19. The swing arm 20 is swingable about the pivot shaft 19. The rear axle 21 is supported by a rear part of the swing arm 20. The rear wheel 22 is supported by the rear axle 21. The rear wheel 22 is rotatable about the rear axle 21.

The straddled vehicle 1 has a chain 23. The chain 23 connects the transmission and the rear wheel 22. The chain 23 transmits the power outputted from the transmission to the rear wheel 22. The rear wheel 22 is rotated by the power transmitted through the chain 23. Thus, the transmission and the chain 23 transmit the power generated by the engine 13 to the rear wheel 22.

The straddled vehicle 1 has a headlight 25 and a front cover 26. The headlight 25 is located in front of the handle 7 in the side view of the vehicle. The headlight 25 emits high beam and low beam. At least part of the front cover 26 is located in front of the handle 7. The front cover 26 covers peripheral areas of the headlight 25. The headlight 25 and front cover 26 are supported by the body frame 2. The headlight 25 and front cover 26 are fixed to the body frame 2. Even when the steering device 6 turns relative to the body frame 2, the headlight 25 and front cover 26 do not turn relative to the body frame 2.

The straddled vehicle 1 has a turn indicator 27. The turn indicator 27 is also called a flasher. The turn indicator 27 includes a right turn indicator (not shown) and a left turn indicator 27L.

The straddled vehicle 1 has a display device 31. The display device 31 displays information on the straddled vehicle 1 to the driver P. The display device 31 is located in front of the handle 7 in the side view of the vehicle. At least part of the display device 31 is located in the same height position as the handle 7 in the side view of the vehicle. The display device 31 is located behind the headlight 25 in the side view of the vehicle. The display device 31 is located behind the front cover 26 in the side view of the vehicle. More particularly, the front cover 26 has a front edge 26a in the side view of the vehicle. The display device 31 is located behind the front edge 26a of the front cover 26 in the side view of the vehicle. The display device 31 is supported by the body frame 2. The display device 31 is fixed to the body frame 2. Even when the steering device 6 turns relative to the body frame 2, the display device 31 does not turn relative to the body frame 2.

The display device 31 has a front face 32. The front face 32 is inclined forward and upward. An upper part of the front face 32 is located more forward and higher than a lower part of the front face 32. The front face 32 is parallel to the transverse direction Y.

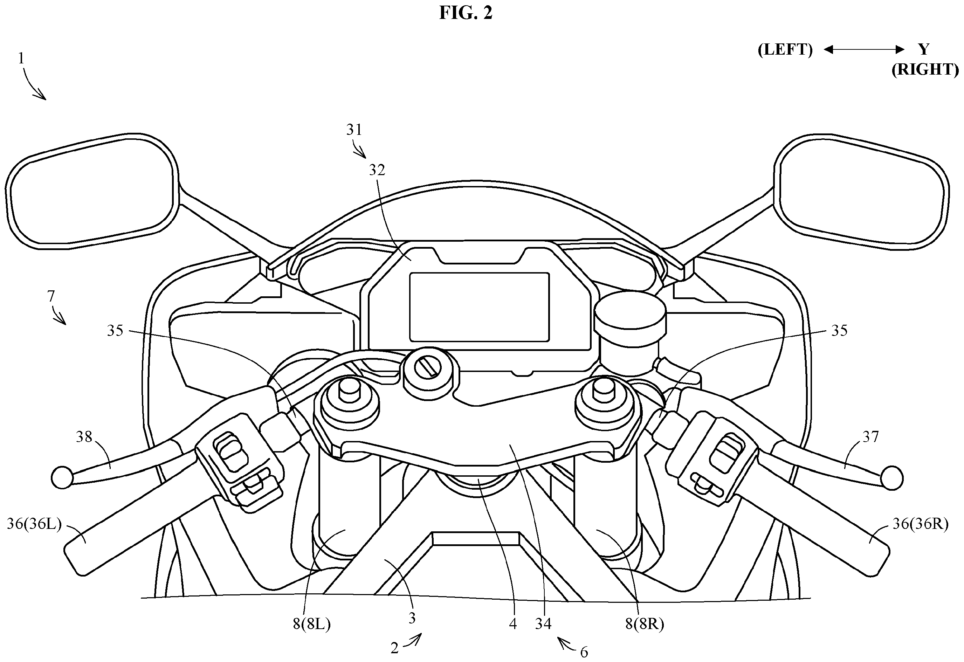

Fig. 2 is a perspective view seen from direction Q in Fig. 1. The body frame 2 has a head tube 4. The head tube 4 is disposed at the front of the body frame 2. The head tube 4 is connected to the main frame 3. The head tube 4 is located in a position lower than the handle 7. The head tube 4 is located in a position higher than the front axle 9 and front wheel 11. The head tube 4 extends forward and downward. The head tube 4 has a tubular shape.

The steering device 6 includes a steering shaft not shown. The steering shaft is inserted in the head tube 4. The steering shaft is rotatable about the axis of the steering shaft relative to the head tube 4. The axis of the steering shaft corresponds to the center of rotation of the steering device 6 relative to the body frame 2.

The steering device 6 has an upper bracket 34. The upper bracket 34 is located above the head tube 4. The upper bracket 34 is supported by the steering shaft. The upper bracket 34 extends in the transverse direction Y. The upper bracket 34 extends from a position more rightward than the head tube 4 to a position more leftward than the head tube 4.

The upper bracket 34 supports the front suspension 8. The front suspension 8 includes a right front suspension 8R and a left front suspension 8L. The right front suspension 8R is located more rightward than the head tube 4. The left front suspension 8L is located more leftward than the head tube 4. The upper bracket 34 supports the right front suspension 8R and left front suspension 8L. The front suspension 8 appearing in Fig. 1 is the left front suspension 8L.

The handle 7 includes a handlebar 35. The handlebar 35 is supported by the front suspension 8. The handlebar 35 extends rightward from the right front suspension 8R. The handlebar 35 extends leftward from the left front suspension 8L.

The handle 7 has grips 36. The grips 36 are attached to the handlebar 35. The grips 36 include a right grip 36R and a left grip 36L. The right grip 36R is attached to a right end of the handlebar 35. The left grip 36L is attached to a left end of the handlebar 35.

The handle 7 includes a brake lever 37 and a clutch lever 38. The brake lever 37 and clutch lever 38 are attached to the handlebar 35. The brake lever 37 is located in a position close to the right grip 36R. The clutch lever 38 is located in a position close to the left grip 36L.

The front face 32 of the display device 31 extends in the transverse direction Y. The front face 32 of the display device 31 extends from a position more rightward than the head tube 4 to a position more leftward than the head tube 4. The display device 31 is located more leftward than the right front suspension 8R and more rightward than the left front suspension 8L.

### 2. Outline Construction of Display Device

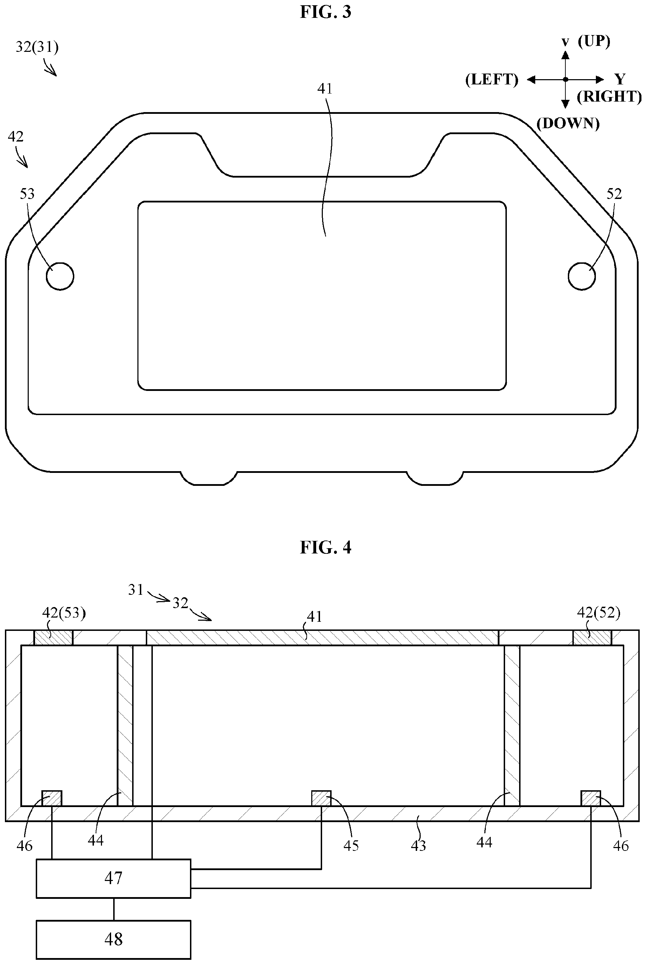

Fig. 3 is a front view of the display device 31. More particularly, Fig. 3 is a view showing the front face 32 of the display device 31.

Fig. 3 shows a vertical direction v of the display device 31 besides the transverse direction Y. The vertical direction v is parallel to the front face 32, and is perpendicular to the transverse direction Y. The vertical direction v corresponds to a direction combining the up-down direction Z and longitudinal direction X. One side of the vertical direction v is called upward, and the other side of vertical direction v downward. Upward in the vertical direction v corresponds to upward in the up-down direction Z and to forward in the longitudinal direction X. Downward in the vertical direction v corresponds to downward in the up-down direction Z and to rearward in the longitudinal direction X. A relationship in arrangement between elements included in the display device 31 will be described with reference to the vertical direction v and transverse direction Y. When describing the arrangement of elements included in the display device 31, upward in the vertical direction v will simply be written upward, and downward in the vertical direction v downward.

The display device 31 has a liquid crystal screen 41. The liquid crystal screen 41 is also called a liquid crystal panel. The liquid crystal screen 41 is disposed on the front face 32. The liquid crystal screen 41 is located substantially at the center of the front face 32. The liquid crystal screen 41 has a substantially rectangular shape. The liquid crystal screen 41 displays images. The liquid crystal screen 41 displays the images in segment system. In other words, the liquid crystal screen 41 does not display the images in dot matrix system. The images are letters, numbers, and graphics, for example.

The display device 31 further includes a lamp display section 42. The lamp display section 42 is disposed on the front face 32. The lamp display section 42 is located around the liquid crystal screen 41. The lamp display section 42 is turned on and off.

The lamp display section 42 has a right lamp display 52 and a left lamp display 53. The right lamp display 52 is located rightward of the liquid crystal screen 41. The left lamp display 53 is located leftward of the liquid crystal screen 41. The right lamp display 52 corresponds to a right direction indicator display. The right lamp display 52 is turned on when a right direction indicator is in operation. The left lamp display 53 corresponds to a left direction indicator display. The left lamp display 53 is turned on when a left direction indicator 27L is in operation.

Fig. 4 is a view showing a construction of the display device 31. The display device 31 has a housing 43, walls 44, a light source 45 for the liquid crystals, and light sources 46 for the lamps. The above-noted liquid crystal screen 41 is supported by the housing 43. The walls 44, light source 45 for the liquid crystals, and light sources 46 for the lamps are arranged in the housing 43. The walls 44 act as partitions between the liquid crystal screen 41 and lamp display section 42. The light source 45 for the liquid crystals is located in a position opposed to the liquid crystal screen 41. The light source 45 for the liquid crystals is also called a backlight. The light sources 46 for the lamps are located in positions opposed to the lamp display section 42.

The straddled vehicle 1 has a display controller 47. The display controller 47 controls the liquid crystal screen 41, light source 45 for the liquid crystals, and light sources 46 for the lamps. The display controller 47 is electrically connected to the liquid crystal screen 41, light source 45 for the liquid crystals, and light sources 46 for the lamps. The display controller 47 may be disposed inside the display device 31. The display controller 47 may be disposed outside the display device 31.

The straddled vehicle 1 has an ECU (Engine Control Unit) 48. The ECU 48 controls the engine 13 and components associated therewith. The ECU 48 is electrically connected to the display controller 47.

Each of the display controller 47 and ECU 48 includes a CPU (central processing unit) and memory. The memory includes a ROM (read-only memory) and a RAM (random-access memory), for example. The ROM stores a system program, a CPU control program, and so on. The RAM temporarily stores various data while being used as working space of the CPU. The CPU realizes various functions by executing the control programs stored in the ROM.

### 3. Outline Construction of Liquid Crystal Screen

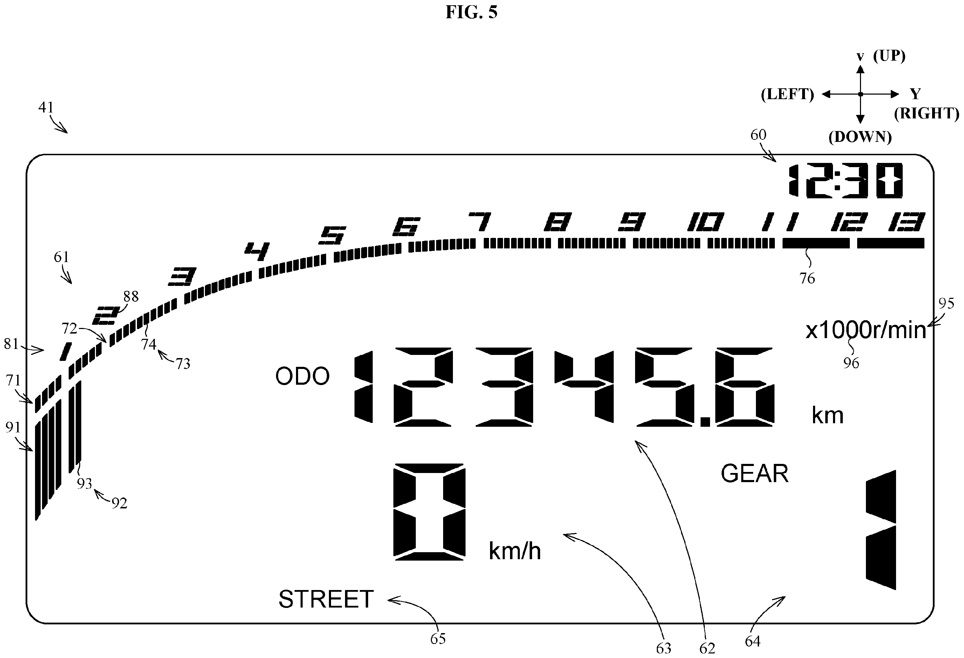

Fig. 5 is a view showing the liquid crystal screen 41 in street mode. The liquid crystal screen 41 displays monochromatic images, for example. The liquid crystal screen 41 does not display color images, for example. Parts of the area of the liquid crystal screen 41 are in a first state, and the other parts of the area of the liquid crystal screen 41 are in a second state. In other words, the liquid crystal screen 41 is classified into the areas in the first state and the areas in the second state. The areas in the first state and the areas in the second state are different at least either in color or in luminance. The liquid crystal screen 41 displays images recognizable based on the areas in the first state and the areas in the second state.

The first state may be called a "display state" or "light state", and the second state may be called a "non-display state" or "dark state". In this specification, the first state will be called the "display state" and the second state the "non-display state".

Fig. 5 shows the areas in the display state in black. Fig. 5 shows the areas in the non-display state in white. The liquid crystal screen 41 displays images recognizable based on the areas in the display state and the areas in the non-display state.
The liquid crystal screen 41 can display images in street mode. The street mode is a riding mode suitable for traveling in urban areas.

The liquid crystal screen 41 includes an indicator 60. The indicator 60 is located in an upper part of the liquid crystal screen 41. More particularly, the indicator 60 is located in an upper right part of the liquid crystal screen 41. The indicator 60 corresponds to a clock indicator. The indicator 60 shows an image indicating time. The image showing the time includes numbers, for example.

The liquid crystal screen 41 includes an indicator 61. The indicator 61 is located below the indicator 60. The indicator 61 extends in the transverse direction Y from a left part of the liquid crystal screen 41 over to a right part of the liquid crystal screen 41. The indicator 61 is curved. Specifically, the indicator 61 inclines rightward and upward from the left part of the liquid crystal screen 41 to a middle part in the transverse direction Y of the liquid crystal screen 41. The indicator 61 is substantially horizontal from the middle part in the transverse direction Y of the liquid crystal screen 41 to the right part of the liquid crystal screen 41.

The indicator 61 corresponds to an engine rotation speed indicator. The indicator 61 shows an image representing the rotation speed of the engine 13. In street mode, the range of the rotation speed of the engine 13 shown by the indicator 61 is from low speed to high speed. In the street mode, the range of the rotation speed of the engine 13 shown by the indicator 61 is from 0 [rpm] to 13000 [rpm], for example.

The liquid crystal screen 41 includes an indicator 62. The indicator 62 is located below the indicator 61. The indicator 62 corresponds to a multi-indicator. When the liquid crystal screen 41 displays images in street mode, the indicator 62 corresponds to an odometer indicator. When the liquid crystal screen 41 displays images in street mode, the indicator 62 displays an image representing a distance traveled by the straddled vehicle 1.

The liquid crystal screen 41 includes an indicator 63. The indicator 63 is located below the indicator 62. The indicator 63 corresponds to a vehicle speed indicator. The indicator 63 displays an image showing speed of the straddled vehicle 1.

The liquid crystal screen 41 includes an indicator 64. The indicator 64 is located in a lower right part of the liquid crystal screen 41. The indicator 64 is located below the indicator 62. The indicator 64 is located rightward of the indicator 63. The indicator 64 corresponds to a gear position indicator. The indicator 64 displays an image showing a gear position.

The liquid crystal screen 41 includes an indicator 65. The indicator 65 is located below the indicator 63. The indicator 65 corresponds to a riding mode indicator. When the liquid crystal screen 41 displays images in street mode, the indicator 65 displays an image showing street mode.

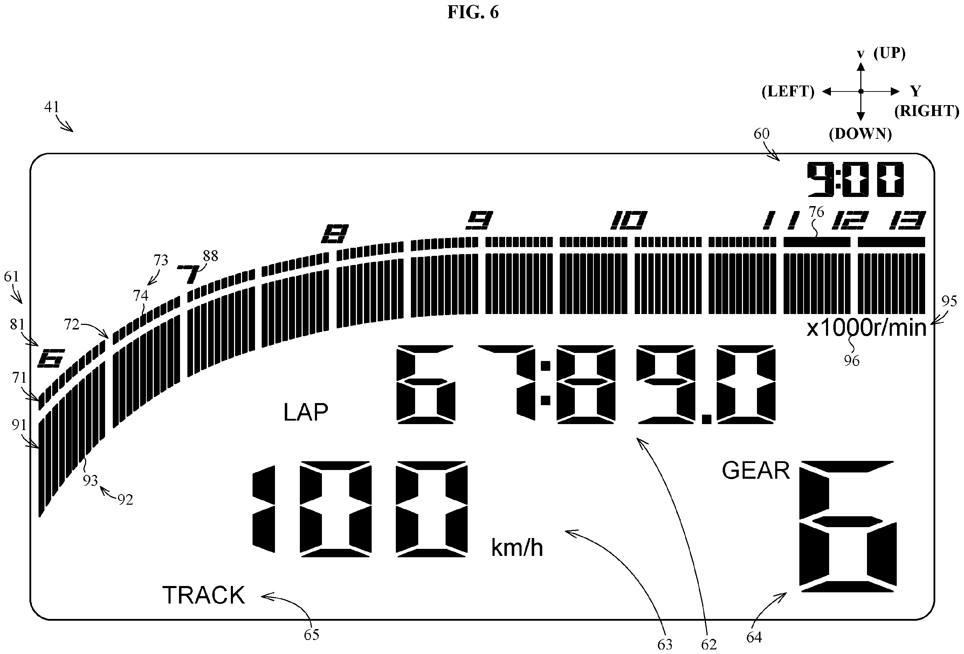

Fig. 6 is a view showing the liquid crystal screen 41 in track mode. The liquid crystal screen 41 can display images in track mode. The track mode is a riding mode suitable for traveling in circuits. When the liquid crystal screen 41 displays images in track mode, the liquid crystal screen 41 does not display images in street mode. When the liquid crystal screen 41 displays images in street mode, the liquid crystal screen 41 does not display images in track mode. That is, the liquid crystal screen 41 gives displays by switching between street mode and track mode.

Also when the liquid crystal screen 41 displays images in track mode, the liquid crystal screen 41 includes the indicators 60-65. The positions of indicators 60-65 in track mode are the same as the positions of indicators 60-65 in street mode, respectively.

In track mode also, the indicators 60, 63, and 64 display the same images as in street mode, in the same positions as in street mode. Specifically, the images displayed on the indicators 60, 63, and 64 in track mode are the same as the images displayed on the indicators 60, 63, and 64 in street mode. The positions of the images displayed on the indicators 60, 63, and 64 in track mode are the same as the positions of the images displayed on the indicators 60, 63, and 64 in street mode.

The images on the indicators 61, 62 and 65 in track mode are different from the images on the indicators 62 and 65 in street mode.

In track mode, the indicator 65 displays an image showing track mode. In track mode, the indicator 65 does not display the image showing street mode. The position of the image showing track mode is different from the position of the image showing street mode. In street mode, the indicator 65 does not display the image showing track mode.

In track mode also, the indicator 61 displays an image showing rotation speed of the engine 13. In track mode, the range of rotation speed of the engine 13 displayed on the indicator 61 does not include low speed. In track mode, the range of rotation speed of the engine 13 displayed on the indicator 61 is from medium speed to high speed. In track mode, the range of rotation speed of the engine 13 displayed on the indicator 61 is 6000 [rpm] to 13000 [rpm], for example. Thus, the range of rotation speed of the engine 13 displayed on the indicator 61 in track mode is narrower than the range of rotation speed of the engine 13 displayed on the indicator 61 in street mode.

In track mode, the indicator 61 displays a medium range and a high range of rotation speed of the engine 13 in greater detail than in street mode. Thus, a scale of rotation speed of the engine 13 displayed on the indicator 61 in track mode is different from a scale of rotation speed of the engine 13 displayed on the indicator 61 in street mode.

In track mode, the indicator 62 corresponds to a lap time indicator. In track mode, the indicator 62 displays an image showing lap time. In track mode, the indicator 62 does not correspond to an odometer. In track mode, the indicator 62 does not display an image representing a distance traveled by the straddled vehicle 1.

The street mode is an example of the first mode in this invention. The track mode is an example of the second mode in this invention.

### 4. Detailed Construction of Indicator 61

Reference is made to Figs. 5 and 6. The indicator 61 has a scale area 71, a number area 81, a rotation speed area 91, and a unit area 95. The scale area 71 extends in the transverse direction Y. The number area 81 is located above the scale area 71. The rotation speed area 91 is located below the scale area 71. The unit area 95 is located below the rotation speed area 91.

The liquid crystal screen 41 can display, respectively, the scale area 71, number area 81, and rotation speed area 91 as switched between street mode and track mode. The rotation speed area 91 is an example of the vehicle information area in this invention. The scale area 71, number area 81, rotational speed area 91, and unit area 95 will be described hereinafter.

### 4-1. Detailed Description of Scale Area 71

The scale area 71 displays images showing a plurality of main scale marks 72, a plurality of auxiliary scale rows 73, and a plurality of red zone lines 76. The images representing the main scale marks 72 will simply be written hereinafter the main scale marks 72. Similarly, the images representing the auxiliary scale rows 73 and red zone lines 76 will simply be written the auxiliary scale rows 73 and red zone lines 76.

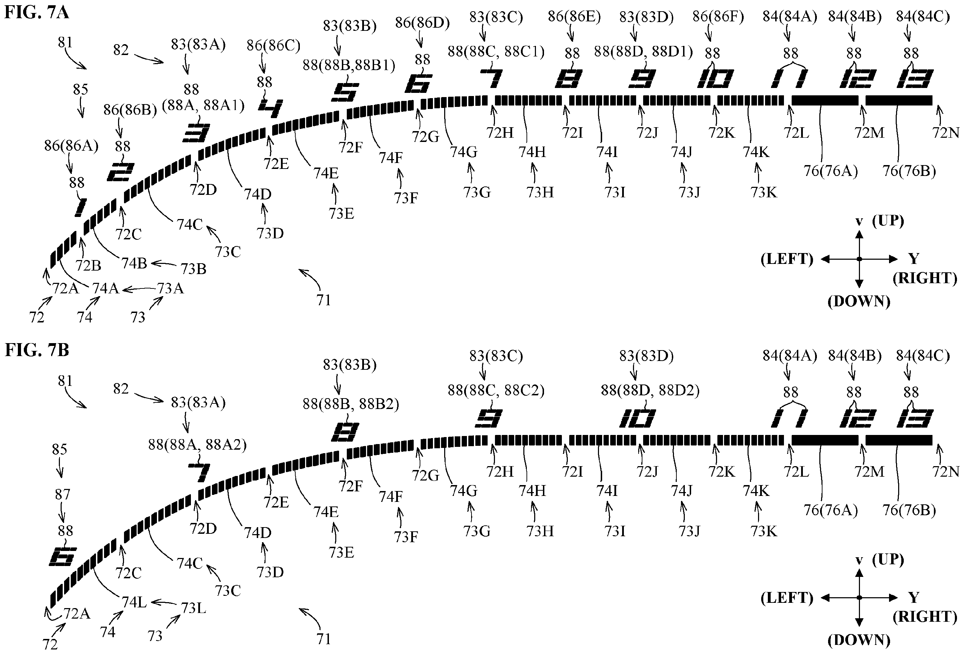

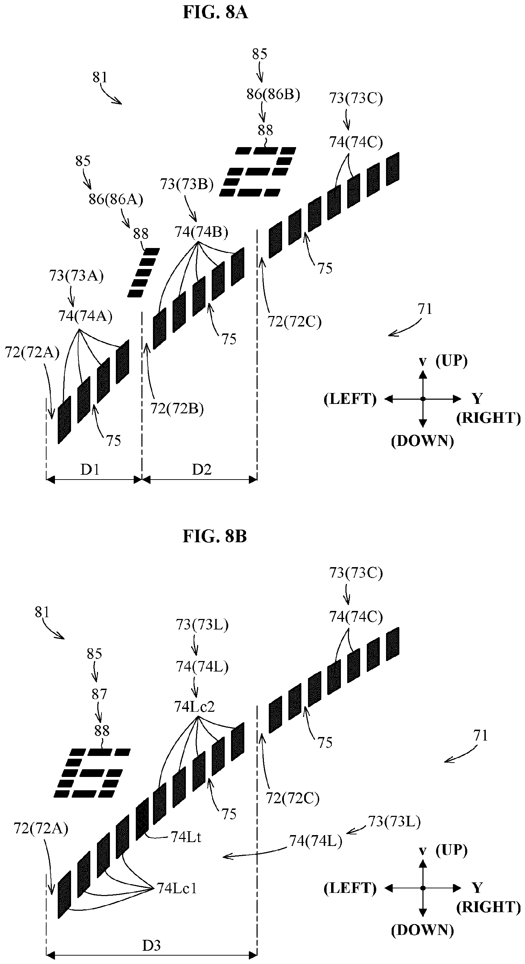

Fig. 7A is a view showing the scale area 71 in street mode. Fig. 8A is a detailed view showing a part of the scale area 71 in street mode. The scale area 71 in street mode will be described.

In street mode, the number of main scale marks 72 displayed in the scale area 71 is 14, for example. The main scale marks 72 are arranged at intervals. The main scale marks 72 are arranged in a row. The main scale marks 72 are arranged in the transverse direction Y.

The main scale marks 72, when distinguished, will be written main scale marks 72A, 72B, 72C, ..., 72M and 72N in order from left to right. The main scale mark 72A is located in the leftmost position among the main scale marks 72A-72N. The main scale mark 72N is located in the rightmost position among the main scale marks 72A-72N.

In street mode, the number of auxiliary scale rows 73 displayed in the scale area 71 is 11, for example. Each auxiliary scale row 73 is located between two adjacent main scale marks 72. The auxiliary scale rows 73 extend in the transverse direction Y. Each auxiliary scale row 73 is larger than one main scale mark 72. Each auxiliary scale row 73 is longer in the transverse direction Y than one main scale mark 72.

The auxiliary scale rows 73, when distinguished, will be written auxiliary scale rows 73A, 73B, 73C, ..., 73J and 73K in order from left to right. The auxiliary scale row 73A is located in the leftmost position among the auxiliary scale rows 73A-73K. The auxiliary scale row 73K is located in the rightmost position among the auxiliary scale rows 73A-73K. The auxiliary scale row 73A is located between the main scale marks 72A and 72B. The auxiliary scale row 73B is located between the main scale marks 72B and 72C.

Certain of the main scale marks 72 are located in positions adjoining ends of the auxiliary scale rows 73. For example, the main scale mark 72A is located in a position adjoining a left end of the auxiliary scale row 73A, and the main scale mark 72B is located in a position adjoining a right end of the auxiliary scale row 73A. The main scale mark 72B is located in a position adjoining a left end of the auxiliary scale row 73B, and the main scale mark 73C is located in a position adjoining a right end of the auxiliary scale row 73B. The main scale mark 72B is located between the auxiliary scale rows 73A and 73B. Similarly, the main scale marks 72C-72L are located in positions adjoining ends of the auxiliary scale rows 73C-73K, respectively. Thus, twelve main scale marks 72 are located in positions adjoining the ends of the auxiliary scale rows 73.

The number of red zone lines 76 displayed in the scale area 71 is two. The red zone lines 76 show that the rotation speed of the engine 13 is equal to or above a predetermined value (e.g. 11000rpm). Each red zone line 76 is located between two adjacent main scale marks 72. The red zone lines 76 extend in the transverse direction Y. Each red zone line 76 is larger than one main scale mark 72. Each red zone line 76 is longer in the transverse direction Y than one main scale mark 72.

The red zone lines 76, when distinguished, will be written red zone lines 76A and 76B in order from left to right. The red zone line 76A is located leftward of the red zone line 76B. The red zone line 76A is located between the main scale marks 72L and 72M. The red zone line 76B is located between the main scale marks 72M and 72N.

A few of the main scale marks 72 are located in positions adjoining ends of the red zone lines 76. Specifically, the main scale mark 72L is located in a position adjoining a left end of the red zone line 76A, and the main scale mark 72M is located in a position adjoining a right end of the red zone line 76A. The main scale mark 72M is located in a position adjoining a left end of the red zone line 76B, and the main scale mark 73N is located in a position adjoining a right end of the red zone line 76B. The main scale mark 72L is located between the auxiliary scale row 73K and red zone line 76A. The main scale mark 72M is located between the red zone lines 76A and 76B.

Each auxiliary scale row 73 is a set of two or more auxiliary scale marks 74. That is, the scale area 71 displays a plurality of auxiliary scale marks 74. The auxiliary scale marks 74 have substantially the same size. Each auxiliary scale mark 74 is slightly smaller than one main scale mark 72. Each auxiliary scale mark 74 is slightly shorter in the transverse direction Y than one main scale mark 72.

The auxiliary scale marks 74 are arranged in a row. The auxiliary scale marks 74 are arranged in the transverse direction Y. A plurality of auxiliary scale marks 74 belonging to the same auxiliary scale row 73 are arranged at equal intervals.

The auxiliary scale marks 74 are arranged also at the ends of the auxiliary scale rows 73. One auxiliary scale mark 74 is located at the left end of an auxiliary scale row 73. Another auxiliary scale mark 74 is located at the right end of the auxiliary scale row 73. Therefore, some main scale marks 72 are located in positions adjoining the auxiliary scale marks 74.

Each auxiliary scale row 73 has a length corresponding to the number of auxiliary scale marks 74 included in the auxiliary scale row 73. The larger number of auxiliary scale marks 74 belonging to the auxiliary scale row 73 makes the longer auxiliary scale row 73 in the transverse direction Y.

The auxiliary scale marks 74 belonging to the auxiliary scale row 73A will be written auxiliary scale marks 74A as appropriate. Similarly, the auxiliary scale marks 74 belonging to the auxiliary scale rows 73B-73K will be written auxiliary scale marks 74B-74K, respectively.

The number of auxiliary scale marks 74A is four. The number of auxiliary scale marks 74B is five. The numbers of auxiliary scale marks 74C-74K are ten, respectively. Here, each of 4, 5, and 10 is a divisor of 1000. That is, the numbers of auxiliary scale marks 74A-74K are divisors of 1000, respectively. Therefore, in street mode, the number of auxiliary scale marks 74 located between two adjacent main scale marks 72 is a divisor of 1000.

A total of auxiliary scale marks 74 displayed in street mode is 99.

Each auxiliary scale row 73 has a plurality of gaps 75. The gaps 75 are located between adjacent auxiliary scale marks 74. The auxiliary scale marks 74 belonging to the same auxiliary scale row 73 are separated by the gaps 75.

Each gap 75 is smaller than one auxiliary scale mark 74. Each gap 75 is shorter in the transverse direction Y than one auxiliary scale mark 74. Each gap 75 is smaller than one main scale mark 72. Each gap 75 is shorter in the transverse direction Y than one main scale mark 72.

The area in which each main scale mark 72 is located is in the non-display state. The area in which each auxiliary scale mark 74 is located is in the display state. The area in which each gap 75 is located is in the non-display state. The areas in which the red zone lines 76 are located are in the display state.

As noted hereinbefore, the main scale marks 72 adjoin at least the auxiliary scale marks 74 or the red zone lines 76. The main scale marks 72 are in the non-display state, and the auxiliary scale marks 74 and red zone lines 76 are in the display state. Thus, since the main scale marks 72 are in the non-display state, and the main scale marks 72 adjoin the areas in the display state, the positions of the main scale marks 72 are conveniently recognizable. Further, since the red zone lines 76 are in the display state and the red zone lines 76 adjoin the areas in the non-display state, the positions of the red zone lines 76 are conveniently recognizable.

The auxiliary scale marks 74 are located in positions adjoining at least either the main scale marks 72 or the gaps 75. The auxiliary scale marks 74 are in the display state, and the main scale marks 72 and gaps 75 are in the non-display state. Thus, since the auxiliary scale marks 74 are in the display state, and the auxiliary scale marks 74 adjoin the areas in the non-display state, the positions of the auxiliary scale marks 74 are conveniently recognizable.

Fig. 7B is a view showing the scale area 71 in track mode. Fig. 8B is a detailed view showing part of the scale area 71 in track mode. The scale area 71 in track mode will be described. In track mode also, the scale area 71 displays the main scale marks 72, auxiliary scale rows 73, and red zone lines 76.

An array of the main scale marks 72 displayed in track mode is different from that of the main scale marks 72 displayed in street mode. The scale area 71 displays the main scale marks 72 as switched between street mode and track mode.

In track mode, the number of the main scale marks 72 displayed in the scale area 71 is 13, for example. The number of main scale marks 72 displayed in track mode is smaller than the number of main scale marks 72 displayed in street mode.

In track mode, the scale area 71 does not display the main scale mark 72B. In track mode, the scale area 71 displays the main scale marks 72A and 72C-72N. The positions of the main scale marks 72A and 72C-72N displayed in track mode are the same as the positions of the main scale marks 72A and 72C-72N displayed in street mode, respectively.

Fig. 8A shows a distance D1 between the main scale marks 72A and 72B. Fig. 8A shows a distance D2 between the main scale marks 72B and 72C. Fig. 8B shows a distance D3 between the main scale marks 72A and 72C. The distance D1 is a distance between the main scale mark 72A and the main scale mark 72B in the transverse direction Y, for example. The same may be said of the distances D2 and D3. The distance D3 is longer than any one of the distances D1 and D2. Here, each of the distances D1 and D2 corresponds to a distance between the main scale marks 72 adjoining each other in street mode. The distance D3 corresponds to a distance between the main scale marks 72 adjoining each other in track mode. Consequently, the scale area 71 in track mode includes a part of longer distance between the adjacent main scale marks 72 than its counterpart of the scale area 71 in street mode.

Reference is made to Fig. 7B. An array of auxiliary scale rows 73 displayed in track mode is different from that of auxiliary scale rows 73 displayed in street mode. An array of auxiliary scale marks 74 displayed in track mode is different from that of auxiliary scale marks 74 displayed in street mode. The scale area 71 displays the auxiliary scale rows 73 (auxiliary scale marks 74) as switched between street mode and track mode.

The number of auxiliary scale rows 73 displayed in track mode is ten, for example. The number of auxiliary scale rows 73 displayed in track mode is smaller than the number of auxiliary scale rows 73 displayed in street mode.

In track mode, the scale area 71 displays an auxiliary scale row 73L in place of the auxiliary scale rows 73A and 73B. Further, the scale area 71 displays the auxiliary scale rows 73C-73K. The positions of the auxiliary scale rows 73C-73K in track mode are the same as the positions of the auxiliary scale rows 73C-73K in street mode, respectively. The main scale mark 72A is located in a position adjoining a left end of the auxiliary scale row 73L, and the main scale mark 72C is located in a position adjoining a right end of the auxiliary scale row 73L. In track mode, the eleven main scale marks 72 (specifically, the main scale marks 72A, 72C-72L) are located in positions adjoining the ends of the auxiliary scale rows 73.

Reference is made to Fig. 8B. The auxiliary scale row 73L corresponds to a combination of the auxiliary scale rows 73A and 73B. Specifically, the auxiliary scale row 73L has a plurality of auxiliary scale marks 74. For expediency, here, the auxiliary scale marks 74 belonging to the auxiliary scale row 73L will be written auxiliary scale marks 74L. The auxiliary scale marks 74L are classified as auxiliary scale marks 74Lc1, auxiliary scale marks 74Lc2, and an auxiliary scale mark 74Lt.

The auxiliary scale marks 74Lc1 correspond to the above-noted auxiliary scale marks 74A. The positions of the auxiliary scale mark 74Lc1 are the same as the positions of the auxiliary scale marks 74A. The auxiliary scale marks 74Lc2 correspond to the above-noted auxiliary scale marks 74B. The positions of the auxiliary scale marks 74Lc2 are the same as the positions of the auxiliary scale marks 74B. In other words, the auxiliary scale marks 74A and 74B are displayed not only in street mode but also in track mode.

The auxiliary scale mark 74Lt is located between the auxiliary scale marks 74Lc1 and auxiliary scale marks 74Lc2. The position of the auxiliary scale mark 74Lt is the same as the position of the main scale mark 72B.

In track mode, the main scale mark 72A and auxiliary scale marks 74Lc1 (74A), auxiliary scale mark 74Lt, auxiliary scale marks 74Lc2 (74B), and main scale mark 72C are arranged in this order. In street mode, the main scale mark 72A, auxiliary scale marks 74Lc1 (74A), main scale mark 72B, auxiliary scale marks 74Lc2 (74B), and main scale mark 72C are arranged in this order.

The number of auxiliary scale marks 74Lc1 (74A) is four. The number of auxiliary scale marks 74Lc2 (74B) is five. The number of auxiliary scale mark 74Lt is one. The number of auxiliary scale marks 74L is a sum total of the number of auxiliary scale marks 74Lc1 (74A), the number of auxiliary scale marks 74Lc2 (74B), and the number of auxiliary scale mark 74Lt. The number of auxiliary scale marks 74L is ten. Thus, the number of auxiliary scale marks 74Lc1 (74A) is a divisor of 1000. The number of auxiliary scale marks 74Lc2 (74B) is a divisor of 1000. The number of auxiliary scale marks 74L is a divisor of 1000.

The main scale mark 72A is an example of the first main scale mark in this invention. The main scale mark 72B is an example of the second main scale mark in this invention. The main scale mark 72C is an example of the third main scale mark in this invention. The auxiliary scale marks 74A (74Lc1) are an example of the first auxiliary scale marks in this invention. The auxiliary scale mark 74Lt is an example of the second auxiliary scale mark in this invention. The auxiliary scale marks 74B (74Lc2) are an example of the third auxiliary scale marks in this invention.

Reference is made to Fig. 7B. The number of auxiliary scale marks 74C-74K displayed in track mode is ten, respectively. Thus, the number of auxiliary scale marks 74C-74L is a divisor of 1000, respectively. In track mode, therefore, the number of auxiliary scale marks 74 located between two adjacent main scale marks 72 is a divisor of 1000.

The total of auxiliary scale marks 74 displayed in track mode is 100. The number of auxiliary scale marks 74 displayed in track mode is larger than the number of auxiliary scale marks 74 displayed in street mode.

An array of red zone lines 76 displayed in track mode is the same as that of red zone lines 76 displayed in street mode. The positions of red zone lines 76 displayed in track mode are the same as the positions of red zone lines 76 displayed in street mode.

### 4-2. Detailed Description of Number Area 81

Reference is made to Figs. 5 and 6. The number area 81 displays images showing scale numbers 88. The images representing the scale numbers 88 will simply be written hereinafter the scale numbers 88. One scale number 88 may be a one-digit number, or may be a two-digit number.

Reference is made to Figs. 7A and 7B. The number area 81 in street mode will be described. The number area 81 displays a plurality of scale numbers 88 in street mode.

The number area 81 in street mode displays the scale numbers 88 in positions corresponding to at least two or more of the main scale marks 72A-72N. Specifically, the number area 81 in street mode displays the scale numbers 88 in positions corresponding to the main scale marks 72B-72N. The number area 81 in street mode does not display a scale number 88 in a position corresponding to the main scale mark 72A. Here, the positions corresponding to the main scale marks 72 are positions above the main scale marks 72, for example.

The number area 81 displays thirteen scale numbers 88 in street mode. The thirteen scale numbers 88 are integers from "1" to "13". A minimum value of the scale numbers 88 displayed in street mode is "1".

Reference is made to Figs. 7B and 8B. The number area 81 in track mode will be described. In track mode also, the number area 81 displays scale numbers 88. However, the scale numbers 88 displayed in track mode are different from the scale numbers 88 displayed in street mode. The number area 81 displays the scale numbers 88 as switched between street mode and track mode.

The number area 81 in track mode displays the scale numbers 88 in positions corresponding to at least two or more of the main scale marks 72A and 72C-72N. Specifically, the number area 81 in track mode displays the scale numbers 88 in positions corresponding to the main scale marks 72A, 72D, 72F, 72H, 72J, and 72L-72N. The number area 81 in track mode does not display scale numbers 88 in positions corresponding to the main scale marks 72C, 72E, 72G, 721, and 72K.

The number area 81 displays eight scale numbers 88 in track mode. The eight scale numbers 88 are integers from "6" to "13". The number of scale numbers 88 displayed in track mode is smaller than the number of scale numbers 88 displayed in street mode.

A minimum value of the scale numbers 88 displayed in track mode is "6". The minimum value of the scale numbers 88 displayed in track mode is larger than the minimum value of the scale numbers 88 displayed in street mode.

Reference is made to Figs. 7A and 7B. The number area 81 includes a common number area 82 and an individual number area 85. The common number area 82 is further divided into a variable area 83 and a constant area 84. The individual number area 85 is further divided into a first individual number area 86 and a second individual number area 87.

The common number area 82 displays the scale numbers 88 in the same positions in both street mode and track mode. Specifically, the common number area 82 displays the scale numbers 88 in positions corresponding to the main scale marks 72D, 72F, 72H, 72J and 72L-72N in both street mode and track mode.

The common number area 82 includes three or more (e.g. four) variable areas 83. Each variable area 83 switches and displays in the same position the scale numbers 88 different from one another. Specifically, the variable areas 83 display the scale numbers 88 different from one another, in positions corresponding to the main scale marks 72D, 72F, 72H, and 72J. The scale numbers 88 displayed in the variable areas 83 in street mode are different from the scale numbers 88 displayed in the variable areas 83 in track mode.

The variable areas 83, when distinguished, will be written variable areas 83A, 83B, 83C, and 83D. The variable areas 83A, 83B, 83C, and 83D are located in positions corresponding to the main scale marks 72D, 72F, 72H, and 72J, respectively. The variable area 83A displays "3" in street mode and "7" in track mode. The variable area 83B displays "5" in street mode and "8" in track mode. The variable area 83C displays "7" in street mode and "9" in track mode. The variable area 83D displays "9" in street mode and "10" in track mode.

The common number area 82 includes two or more (e.g. three) constant areas 84. The respective constant areas 84 display the same scale numbers 88 in the same positions in both street mode and track mode. Specifically, the constant areas 84 display the same scale numbers 88 in positions corresponding to the main scale marks 72L, 72M, and 72N. The scale numbers 88 displayed in the constant areas 84 in street mode are the same as the scale numbers 88 displayed in the constant areas 84 in track mode.

The constant areas 84, when distinguished, will be written constant areas 84A, 84B, and 84C. The constant areas 84A, 84B, and 84C are located in positions corresponding to the main scale marks 72L, 72M, and 72N, respectively. The constant area 84A displays "11" in both street mode and track mode. The constant area 84B displays "12" in both street mode and track mode. The constant area 84C displays "13" in both street mode and track mode.

The individual number area 85 displays the scale numbers 88 in one of street mode and track mode, and does not display the scale numbers 88 in the other of street mode and track mode.

The individual number area 85 includes two or more (e.g. six) first individual number areas 86. The first individual number areas 86 display the scale numbers 88 in street mode, and do not display the scale numbers 88 in track mode. Specifically, the first individual number areas 86 are located in positions corresponding to the main scale marks 72B, 72C, 72E, 72G, 721, and 72K.

The first individual number areas 86, when distinguished, will be written first individual number areas 86A, 86B, ..., and 86F. The first individual number areas 86A, 86B, ..., and 86F are located in positions corresponding to the main scale marks 72B, 72C, 72E, 72G, 721, and 72K, respectively. The first individual number areas 86A, 86B, ..., 86F display "1", "2", "4", "6", "8", and "10" only in street mode, respectively.

The individual number area 85 includes one or more (e.g. one) second individual number area 87. The second individual number area 87 displays a scale number 88 in track mode, and does not display a scale number 88 in street mode. Specifically, the second individual number area 87 is located in a position corresponding to the main scale mark 72A. The second individual number area 87 displays "6" in track mode only.

### 4-3. Detailed Description of Rotation Speed Area 91

Reference is made to Figs. 5 and 6. The rotation speed area 91 displays an image showing the rotation speed of the engine 13. The image representing the rotation speed of the engine 13 will simply be written hereinafter rotation speed bar 92. The rotation speed area 91 displays the rotation speed bar 92 along the main scale marks 72, auxiliary scale rows 73 (auxiliary scale marks 74), and red zone lines 76. The rotation speed bar 92 is an example of the vehicle information in this invention. More particularly, the rotation speed bar 92 is an example of the "information concerning rotation speed of an engine" in this invention.

The rotation speed area 91 displays the rotation speed bar 92 as switched between street mode and track mode. The rotation speed area 91 in street mode displays the rotation speed bar 92 with reference to the main scale marks 72 and auxiliary scale marks 74 displayed in the scale area 71, and the scale numbers 88 displayed in the number area 81. The rotation speed area 91 in track mode displays the rotation speed bar 92 with reference to the main scale marks 72 and auxiliary scale marks 74 displayed in the scale area 71, and the scale numbers 88 displayed in the number area 81.

The rotation speed bar 92 is a set of strips 93. The strips 93 are arranged in the transverse direction Y. Each strip 93 has a long narrow shape. Each strip 93 extends in the vertical direction v. Each strip 93 is independently switchable between the display state and non-display state.

The strips 93 are located below the auxiliary scale marks 74 and red zone lines 76. The number of strips 93 the rotation speed areas 91 can display in street mode is 119, for example. The rotation speed area 91 in street mode displays the rotation speed of the engine 13 in 119 stages. The number of strips 93 the rotation speed areas 91 can display in track mode is 120, for example. The rotation speed area 91 in track mode displays the rotation speed of the engine 13 in 120 stages.

The strips 93 successively switch to the display state from left to right. When the rotation speed area 91 includes one or more strips 93 in the display state and one or more strips 93 in the non-display state, all the strips 93 in the display state are located more leftward than any one of the strips 93 in the non-display state.

The number of strips 93 in the display state changes with the rotation speed of the engine 13. That is, in response to the rotation speed of the engine 13 an imaginary boundary between a group of strips 93 in the display state and a group of strips 93 in the non-display state moves in the transverse direction Y. As the rotation speed of the engine 13 increases, the number of strips 93 in the display state increases, and the boundary moves rightward. The strip 93 in the display state closest to the boundary is a strip 93 located in the rightmost position among the strips 93 in the display state. The position of the strip 93 in the display state closest to the boundary corresponds to the value of the rotation speed of the engine 13.

### 4-4. Detailed Description of Unit Area 95

The unit area 95 displays an image showing a unit 96 of the rotation speed of the engine 13. The image representing the unit 96 will simply be written hereinafter unit 96. The unit area 95 displays the same unit 96 in the same position in both street mode and track mode. The unit 96 is [rpm], for example.

In street mode, the range of rotation speed of the engine 13 displayed on the indicator 61 is from 0 [rpm] to 13000 [rpm]. In street mode, the main scale marks 72 are displayed by increments of 1000 [rpm]. The auxiliary scale marks 74A are displayed by increments of 250 [rpm]. The auxiliary scale marks 74B are displayed by increments of 200 [rpm]. The auxiliary scale marks 74C-74K are displayed by increments of 100 [rpm].

In track mode, the range of rotation speed of the engine 13 displayed on the indicator 61 is from 6000 [rpm] to 13000 [rpm]. In track mode, the main scale marks 72A and 72C-72L are displayed by increments of 500 [rpm]. In track mode, the main scale marks 72L-72N are displayed by increments of 1000 [rpm]. The auxiliary scale marks 74C-74L are displayed by increments of 50 [rpm].

### 5. Display Methods of Liquid Crystal Screen 41

Display methods particularly of the scale area 71 and number area 81 will be described in detail.

### 5-1. The Display Method of Scale Area 71

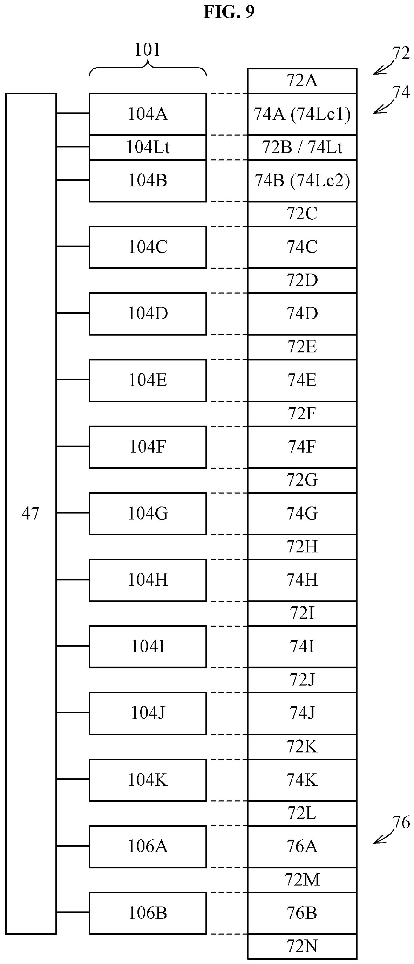

Fig. 9 is a schematic view showing display control of the scale area 71. The scale area 71 displays the main scale marks 72, auxiliary scale rows 73 (auxiliary scale marks 74 and gaps 75), and red zone lines 76 in a segment system.

Specifically, the scale area 71 has a plurality of (e.g. 14) scale mark segments 101. The scale area 71 displays the main scale marks 72, auxiliary scale rows 73 (auxiliary scale marks 74 and gaps 75), and red zone lines 76 to be recognizable by means of the scale mark segments 101.

Each scale mark segment 101 has a part of the scale area 71. The scale mark segments 101 are switchable between the display state and non-display state. More particularly, the scale mark segments 101 can switch the areas in which the scale mark segments 101 are located, between the display state and non-display state. Each scale mark segment 101 can be switched, independently of the others, between the display state and non-display state. Each whole scale mark segment 101 is switchable to one of the display state and non-display state. One scale mark segment 101 does not include a portion in the display state and a portion in the non-display state at the same time. Thus, each scale mark segment 101 is a minimum area that can be switched between the display state and non-display state.

Each scale mark segment 101 is controlled by the display controller 47. For example, each scale mark segment 101 is a transparent electrode formed on the liquid crystal screen 41. The display controller 47 applies voltage to each scale mark segment 101 individually. Consequently, variations of optical transmittance occur in the areas of the scale mark segments 101. For example, the areas of the scale mark segments 101 switch between a light transmission state and a light non-transmission state. Here, the light transmission state corresponds to the display state noted above, and the light non-transmission state corresponds to the above-noted non-display state.

The scale mark segments 101, when distinguished, will be written scale mark segments 104A-104K, 104Lt, 106A, and 106B.

The scale mark segment 104A is located in the positions of auxiliary scale marks 74A (74Lc1). Since the plurality of auxiliary scale marks 74A are separated from one another, one scale mark segment 104A is, actually, also located separately. The scale mark segment 104B is located in the positions of auxiliary scale marks 74B (74Lc2). The scale mark segment 104Lt is located in the position of auxiliary scale mark 74Lt. The scale mark segments 104A and 104B are in the display state in both street mode and track mode. The scale mark segment 104Lt is in the non-display state in street mode, and is in the display state in track mode.

Thus, the scale area 71 in street mode displays the main scale marks 72A, 72B, and 72C and auxiliary scale marks 74A and 74B to be recognizable. Further, the scale area 71 in street mode displays the gaps 75 belonging to the auxiliary scale rows 73A and 73B to be recognizable. The scale area 71 in track mode displays the main scale marks 72A and 72C and auxiliary scale marks 74L (74Lc1, 74Lc2, 74Lt) to be recognizable. The scale area 71 in track mode displays the gaps 75 belonging to the auxiliary scale row 73L to be recognizable. Thus, the scale area 71 displays the main scale marks 72A, 72B, and 72C to be recognizable by means of the scale mark segments 104A, 104B and 104Lt.

The scale mark segment 104A is an example of the first scale mark segment in this invention. The scale mark segment 104Lt is an example of the second scale mark segment in this invention. The scale mark segment 104B is an example of the third scale mark segment in this invention.

The scale mark segments 104C-104K are located in the positions of auxiliary scale marks 74C-74K, respectively. The scale mark segments 106A and 106B are located in the positions of red zone lines 76A and 76B, respectively. The scale mark segments 104C-104K, 106A and 106B are in the display state in both street mode and track mode.

Consequently, the scale area 71 displays the main scale marks 72C-72N, auxiliary scale marks 74C-74K, and red zone lines 76A and 76B to be recognizable in both street mode and track mode. Further, the scale area 71 in both street mode and track mode displays the gaps 75 belonging to the auxiliary scale rows 73C-73K to be recognizable. Thus, the scale area 71 displays the main scale marks 72C-72N to be recognizable by means of the scale mark segments 104C-104K, 106A and 106B.

A pattern of switching between the display state and non-display state relating to the scale mark segments 101 may be summarized as follows. The scale mark segments 104A-104K, 106A and 106B are in the display state in both street mode and track mode. The scale mark segment 104Lt is in the display state in track mode, and in the non-display state in street mode.

### 5-2. The Display Method of Number Area 81

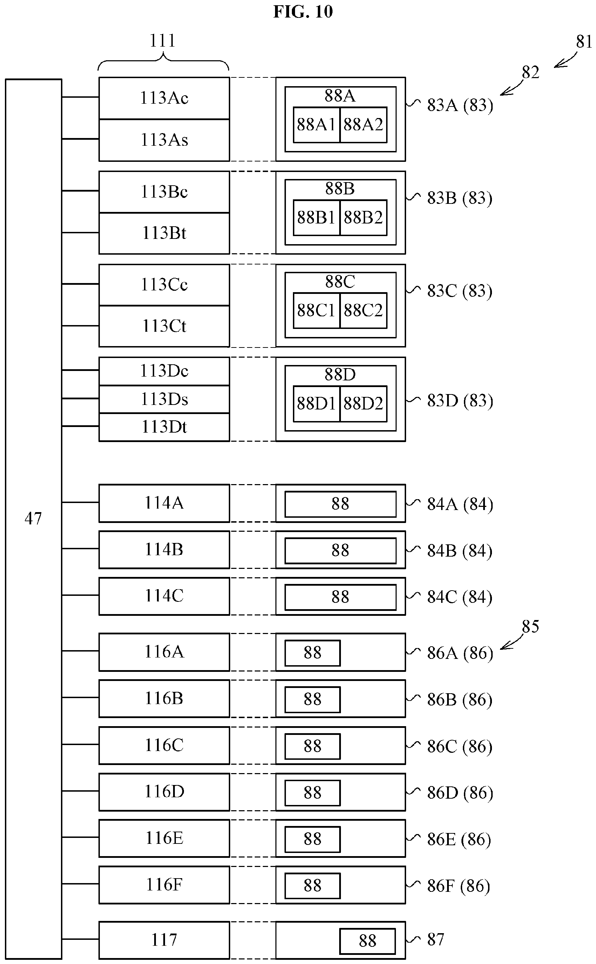

Fig. 10 is a schematic view showing display control of the number area 81. The number area 81 displays the scale numbers 88 in the segment system.

Specifically, the number area 81 has a plurality of (e.g. 19) number segments 111. The number segments 111 are switchable between the display state and non-display state. The number area 81 displays the scale numbers 88 by means of the number segments 111.

The number segments 111 have a construction and function similar to the scale mark segments 101. Each number segment 111 has a part of the number area 81. Each number segment 111 is switchable between the display state and non-display state independently of the others. Each number segment 111 is a minimum area that can be switched between the display state and non-display state. Each number segment 111 is controlled by the display controller 47.

The number segments 111, when distinguished, will be written number segments 113Ac, 113As, 113Bc, 113Bt, 113Cc, 113Ct, 113Dc, 113Ds, 113Dt, 114A-114C, 116A-116F, and 117.

The number segments 113Ac and 113As are located in the variable area 83A.

Similarly, the number segments 113Bc and 113Bt are located in the variable area 83B. The number segments 113Cc and 113Ct are located in the variable area 83C. The number segments 113Dc, 113Ds, and 113Dt are located in the variable area 83D. Each of the variable areas 83A, 83B, and 83C switchably displays different scale numbers 88 in the same position by means of two number segments 111. The variable area 83D switchably displays different scale numbers 88 in the same position by means of three number segments 111.

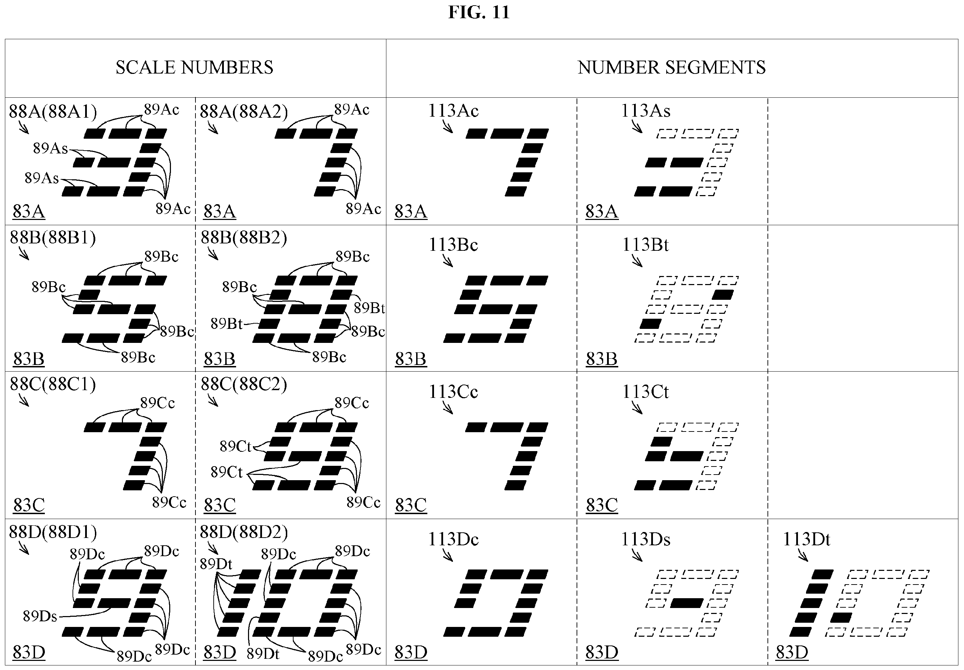

Fig. 11 is a view schematically showing a relationship between the scale numbers 88 displayed in the variable areas 83 and number segments 111. In the following description, the scale numbers 88 displayed in the variable areas 83A-83D will be written scale numbers 88A-88D as appropriate. Further, the scale numbers 88A-88D displayed in street mode will be written first scale numbers 88A1-88D1 as appropriate. The scale numbers 88A-88D displayed in track mode will be written second scale numbers 88A2-88D2 as appropriate.

The first scale number 88A1 and second scale number 88A2 are formed of common parts 89Ac and first parts 89As. The common parts 89Ac are parts common to the first scale number 88A1 and second scale number 88A2. In other words, the common parts 89Ac are parts included in the first scale number 88A1 and in the second scale number 88A2. The first parts 89As are parts included in the first scale number 88A1, and not in the second scale number 88A2. The first scale number 88A1 is formed of the common parts 89Ac and first parts 89As. The second scale number 88A2 is formed only of the common parts 89Ac.

The number segment 113Ac is located in the positions of the common parts 89Ac. The number segment 113As is located in the first parts 89As. In Fig. 11, the figure of number segment 113As shows the number segment 113Ac in broken lines as reference. The number segment 113Ac is in the display state in street mode and track mode. The number segment 113As is in the display state in street mode, and in the non-display state in track mode. Consequently, the variable area 83A displays the first scale number 88A1 in street mode, and the second scale number 88A2 in track mode.

The first scale number 88B1 and second scale number 88B2 are formed of common parts 89Bc and second parts 89Bt. The common parts 89Bc are parts common to the first scale number 88B1 and second scale number 88B2. The second parts 89Bt are parts included in the second scale number 88B2, and not in the first scale number 88B1. The first scale number 88B1 is formed of the common parts 89Bc. The second scale number 88B2 is formed of the common parts 89Bc and second parts 89Bt.

The number segment 113Bc is located in the positions of the common parts 89Bc. The number segment 113Bt is located in the positions of the second parts 89Bt. The number segment 113Bc is in the display state in street mode and track mode. The number segment 113Bt is in the display state in track mode, and in the non-display state in street mode. Consequently, the variable area 83B displays the first scale number 88B1 in street mode, and the second scale number 88B2 in track mode.

The first scale number 88C1 and second scale number 88C2 are formed of common parts 89Cc and second parts 89Ct. The common parts 89Cc are parts common to the first scale number 88C1 and second scale number 88C2. The second parts 89Ct are parts included in the second scale number 88C2, and not in the first scale number 88C1. The first scale number 88C1 is formed of the common parts 89Cc. The second scale number 88C2 is formed of the common parts 89Cc and second parts 89Ct.

The number segment 113Cc is located in the positions of the common parts 89Cc. The number segment 113Ct is located in the positions of the second parts 89Ct. The number segment 113Cc is in the display state in street mode and track mode. The number segment 113Ct is in the display state in track mode, and in the non-display state in street mode. Consequently, the variable area 83C displays the first scale number 88C1 in street mode, and the second scale number 88C2 in track mode.

The first scale number 88D1 and second scale number 88D2 are formed of common parts 89Dc, first part 89Ds, and second parts 89Dt. The common parts 89Dc are parts common to the first scale number 88D1 and second scale number 88D2. The first part 89Ds is a part included in the first scale number 88D1, and not in the second scale number 88D2. The second parts 89Dt are parts included in the second scale number 88D2, and not in the first scale number 88D1. The first scale number 88D1 is formed of the common parts 89Dc and first part 89Ds. The second scale number 88D2 is formed of the common parts 89Dc and second parts 89Dt.

The number segment 113Dc is located in the positions of the common parts 89Dc. The number segment 113Ds is located in the position of the first part 89Ds. The number segment 113Dt is located in the positions of the second parts 89Dt. The number segment 113Dc is in the display state in street mode and track mode. The number segment 113Ds is in the display state in street mode, and in the non-display state in track mode. The number segment 113Dt is in the display state in track mode, and in the nondisplay state in street mode. Consequently, the variable area 83D displays the first scale number 88D1 in street mode and the second scale number 88D2 in track mode.

Thus, the variable areas 83A-83C display different scale numbers 88A-88C as switched between street mode and track mode in the same positions by means of two number segments 111, respectively. The variable area 83D displays different scale numbers 88D switched between street mode and track mode in the same position by means of three number segments 111.

The variable areas 83A-83C are an example of the second variable area in this invention, respectively. The variable area 83D is an example of the first variable area in this invention. The number segments 113Ac, 113Bc, 113Cc, and 113Dc are examples of the common number segments in this invention, respectively. The number segments 113As and 113Ds are examples of the first number segments in this invention, respectively. The number segments 113Bt, 113Ct, and 113Dt are examples of the second number segments in this invention, respectively.

Reference is made to Fig. 10. The number segment 114A is located in the constant area 84A. More particularly, the number segment 114A is located in the positions of the scale numbers 88 displayed in the constant area 84A. The number segment 114A is in the display state in both street mode and track mode. Consequently, the constant area 84A displays the same scale number 88 in both street mode and track mode.

Similarly, the number segments 114B and 114C are located in the scale numbers 88 in the constant areas 84B and 84C, respectively. The number segments 114B and 114C are in the display state in both street mode and track mode. Consequently, the constant areas 84B and 84C display the same scale numbers 88 in both street mode and track mode.

Thus, each of the constant areas 84A-84C displays the scale number 88 in both street mode and track mode by means of one number segment 111.

The number segment 116A is located in the first individual number area 86A. More particularly, the number segment 116A is located in the position of the scale number 88 displayed in the first individual number area 86A. The number segment 116A is in the display state in street mode, and in the non-display state in track mode. Consequently, the first individual number area 86A displays the scale number 88 in street mode, and does not display the scale number 88 in track mode.

Similarly, the number segments 116B-116F are located in the scale numbers 88 of the first individual number areas 86B-86F, respectively. The number segments 116B-116F are in the display state in street mode, and in the non-display state in track mode, respectively. Consequently, the first individual number areas 86B-86F display the scale numbers 88 in street mode, and do not display the scale numbers 88 in track mode.

Thus, each of the first individual number areas 86A-86F displays the scale number 88 only in street mode by means of one number segment 111.

The number segment 117 is located in the second individual number area 87. More particularly, the number segment 117 is located in the position of the scale number 88 displayed in the second individual number area 87. The number segment 117 is in the display state in track mode, and in the non-display state in street mode. Consequently, the second individual number area 87 displays the scale number 88 in track mode, and does not display the scale number 88 in street mode.

Thus, the second individual number area 87 displays the scale number 88 only in track mode by means of one number segment 111.

A pattern of switching between the display state and non-display state relating to the number segments 111 may be summarized as follows. The number segments 113Ac, 113Bc, 113Cc, 113Dc, and 114A-114C are in the display state in both street mode and track mode. The number segments 113As, 113Ds, and 116A-116F are in the display state in street mode, and in the non-display state in track mode. The number segments 113Bt, 113Ct, 113Dt, and 117 are in the display state in track mode, and in the non-display state in street mode.

### 5-3. The Display Methods of Other Areas

The rotation speed area 91 also displays the rotation speed bar 92 in the segment system. The unit area 95 also displays the unit 96 in the segment system. The indicators 60-65 also display the images in the segment system.

### 6. Advantageous Effects

According to this embodiment, the display device 31 has the liquid crystal screen 41. The liquid crystal screen 41 has the indicator 61. The indicator 61 has the scale area 71, number area 81, and rotation speed area 91. The scale area 71 displays the main scale marks 72. The number area 81 displays the scale numbers 88. The rotation speed area 91 displays the rotation speed bar 92 along the main scale marks 72. The liquid crystal screen 41 can display the main scale marks 72, scale numbers 88, and rotation speed bar 92 as switched between street mode and track mode. Consequently, the display device 31 can display rotation speed of the engine 13 in a plurality of modes.

The number of main scale marks 72 displayed in street mode is larger than the number of main scale marks 72 displayed in track mode. Further, the scale area 71 in track mode includes a part of longer distance between the main scale marks 72 than its counterpart of the scale area 71 in street mode. Thus, the number of the main scale marks 72 and the distance between the main scale marks 72 are different between street mode and track mode. That is, the array of the main scale marks 72 is different between street mode and track mode.

The number area 81 in street mode displays the scale numbers 88 in positions corresponding to at least two or more main scale marks 72 displayed in the scale area 71. In street mode, therefore, the number area 81 can display the scale numbers 88 in appropriate positions. Similarly, the number area 81 in track mode displays the scale numbers 88 in positions corresponding to at least two or more main scale marks 72 displayed in the scale area 71. The number area 81 can, therefore, display the scale numbers 88 in appropriate positions also in track mode.

The rotation speed area 91 in street mode displays the rotation speed bar 92 with reference to the main scale marks 72 displayed in the scale area 71, and the scale numbers 88 displayed in the number area 81. The rotation speed area 91 in track mode displays the rotation speed bar 92 with reference to the main scale marks 72 displayed in the scale area 71 and the scale numbers 88 displayed in the number area 81. As noted above, the array of the main scale marks 72 is different between street mode and track mode. The rotation speed of the engine 13 can, therefore, be displayed on different scales by switching between street mode and track mode.

The number area 81 has a plurality of number segments 111. Each number segment 111 can be switched between the display state and the non-display state. The number area 81 displays the scale numbers 88 by means of the number segments 111. The display device 31 can, therefore, be constructed at low cost.

The number area 81 includes the common number area 82. The common number area 82 displays the scale numbers 88 in the same positions in both street mode and track mode. The common number area 82 has four variable areas 83. Each variable area 83 switches and displays different scale numbers 88 in the same position.

The variable area 83D switches and displays the scale numbers 88 different from one another in the same position by means of three number segments 111. That is, the number of number segments 111 the variable area 83D uses is three. Thus, there are relatively few number segments 111 used in the variable area 83D. Consequently, the display device 31 can be constructed at still less cost.

Each of the variable areas 83A-83C switches and displays the scale numbers 88 different from each other in the same position by means of two number segments 111. That is, the number of number segments 111 each of the variable areas 83A-83C uses is two. Thus, there are still fewer number segments 111 used in the variable areas 83A-83C. Consequently, the display device 31 can be constructed at further reduced cost.

As noted above, the display device 31 can display the rotation speed of the engine 13 in a plurality of modes, and that at low cost. This can hold down the cost of the straddled vehicle 1.

The variable area 83A has number segments 113Ac and 113As. The number segment 113Ac is located in the common parts 89Ac, and is in the display state in both street mode and track mode. The number segment 113As is located in the first parts 89As, and is in the display state in street mode and in the non-display state in track mode. Consequently, the variable area 83A can switch and display the first scale number 88A1 and second scale number 88A2 in the same position by means of two number segments 111.

The variable area 83B has number segments 113Bc and 113Bt. The number segment 113Bc is located in the common parts 89Bc, and is in the display state in both street mode and track mode. The number segment 113Btis located in the second parts 89Bt, and is in the display state in track mode and in the non-display state in street mode. Consequently, the variable area 83B can switch and display the first scale number 88B1 and second scale number 88B2 in the same position by means of two number segments 111.

The variable area 83C has number segments 113Cc and 113Ct. The number segment 113Cc is located in the common parts 89Cc, and is in the display state in both street mode and track mode. The number segment 113Ct is located in the second parts 89Ct, and is in the display state in track mode and in the non-display state in street mode. Consequently, the variable area 83C can switch and display the first scale number 88C1 and second scale number 88C2 in the same position by means of two number segments 111.

The variable area 83D has number segments 113Dc, 113Ds, and 113Dt. The number segment 113Dc is located in the common parts 89Dc, and is in the display state in both street mode and track mode. The number segment 113Ds is located in the first part 89Ds, and is in the display state in street mode and in the non-display state in track mode. The number segment 113Dt is located in the second parts 89Dt, and is in the display state in track mode and in the non-display state in street mode. Consequently, the variable area 83D can switch and display the first scale number 88D1 and second scale number 88D2 in the same position by means of three number segments 111.

The common number area 82 includes constant areas 84. The constant areas 84 display the same scale numbers 88 in the same positions in both street mode and track mode. Each constant area 84 displays a scale number 88 in both street mode and track mode by one number segment 111. Thus, the number of number segments 111 each constant area 84 uses is one. Thus, few number segments 111 are used in the constant areas 84. The display device 31 can, therefore, be constructed at further reduced cost.

The minimum of scale numbers 88 displayed in track mode is larger than the minimum of scale numbers 88 displayed in street mode. That is, the minimum of the rotation speed of the engine 13 displayed in track mode is larger than the minimum of the rotation speed of the engine 13 displayed in street mode. The rotation speed of the engine 13 can, therefore, be displayed in different numerical ranges by switching between street mode and track mode.

The scale area 71 has a plurality of scale mark segments 101. Each scale mark segment 101 is switchable between the display state and non-display state. The scale area 71 can display the main scale marks 72 to be recognizable by means of the scale mark segments 101. The display device 31 can, therefore, be constructed at further reduced cost.

The scale area 71 further displays a plurality of auxiliary scale marks 74. The scale area 71 can display the auxiliary scale marks 74 to be switchable between street mode and track mode. The number of auxiliary scale marks 74 displayed in street mode is smaller than the number of auxiliary scale marks 74 displayed in track mode. Consequently, the array of auxiliary scale marks 74 varies between street mode and track mode. The rotation speed of the engine 13 can, therefore, be displayed on different scales by switching between street mode and track mode.

In street mode, the number of auxiliary scale marks 74 located between two adjacent main scale marks 72 is a divisor of 1000. In track mode also, the number of auxiliary scale marks 74 located between two adjacent main scale marks 72 is a divisor of 1000. The rider P can, therefore, accurately and easily grasp a value or quantity meant by each auxiliary scale mark 74 in street mode. Similarly, the rider P can accurately and easily grasp a value and quantity meant by each auxiliary scale mark 74 in track mode.

The scale area 71 displays auxiliary scale rows 73. Each auxiliary scale row 73 is a set of two or more auxiliary scale marks 74 arranged at equal intervals to form one row. Some main scale marks 72 are located in positions adjoining ends of the auxiliary scale rows 73. The main scale marks 72 and auxiliary scale rows 73 can, therefore, be placed close to each other conveniently. This enables the rider P to see easily both the main scale marks 72 and auxiliary scale rows 73.

The areas in which the main scale marks 72 are located are in the non-display state. The areas in which the main scale marks 72 are located adjoin the areas in the display state. Consequently, the main scale marks 72 can be displayed recognizably.

There are auxiliary scale marks 74 located at the ends of the auxiliary scale rows 73. Consequently, some main scale marks 72 are located in positions adjoining the auxiliary scale marks 74. More particularly, some main scale marks 72 are located in positions adjoining the auxiliary scale marks 74 located at the ends of the auxiliary scale rows 73. The areas in which the auxiliary scale marks 74 are located are in the display state. The areas in which the main scale marks 72 are located are in the non-display state. Thus, since the main scale marks 72 are areas in the non-display state, and the main scale marks 72 adjoin the areas in the display state, the main scale marks 72 can be displayed recognizably.

Some main scale marks 72 are located in positions adjoining ends of the red zone lines 76. The areas in which the red zone lines 76 are located are in the display state. Thus, since the main scale marks 72 are areas in the non-display state, and the main scale marks 72 adjoin the areas in the display state, the main scale marks 72 can be displayed recognizably.

The auxiliary scale rows 73 have gaps 75. The gaps 75 are located between adjacent auxiliary scale marks 74. The areas in which the gaps 75 are located are in the non-display state. Each gap 75 is smaller than one main scale mark 72. Therefore, even though both the main scale marks 72 and gaps 75 are areas in the non-display state, the rider P can conveniently be prevented from confusing the main scale marks 72 and gaps 75.

Each gap 75 is smaller than one auxiliary scale mark 74. Each main scale mark 72 is larger than one auxiliary scale mark 74. Thus, the main scale marks 72 are sufficiently larger than the gaps 75. Therefore, even though both the main scale marks 72 and gaps 75 are areas in the non-display state, the rider P can be prevented with increased certainty from confusing the main scale marks 72 and gaps 75.

The main scale marks 72 include main scale marks 72A, 72B, and 72C. The auxiliary scale marks 74 include auxiliary scale marks 74A (74Lc1), auxiliary scale marks 74Lt, and auxiliary scale marks 74B (74Lc2).

The main scale marks 72A, 72B, and 72C are displayed to be recognizable in street mode. The auxiliary scale marks 74A (74Lc1) and 74B (74Lc2) are displayed in street mode. The auxiliary scale mark 74Lt is not displayed in street mode. In street mode, the main scale mark 72A, auxiliary scale marks 74A (74Lc1), main scale mark 72B, auxiliary scale marks 74B (74Lc2), and main scale mark 72C are arranged in this order. In street mode, therefore, the auxiliary scale marks 74A (74Lc1) are displayed between the main scale marks 72A and 72B. The number of auxiliary scale marks 74A (74Lc1) is a divisor of 1000. The rider P can, therefore, accurately and easily grasp values or quantities meant by the auxiliary scale marks 74A (74Lc1) in street mode. Further, in street mode, the auxiliary scale marks 74B (74Lc2) are displayed between the main scale marks 72B and 72C. The number of auxiliary scale marks 74B (74Lc2) is a divisor of 1000. The rider P can, therefore, accurately and easily grasp values or quantities meant by the auxiliary scale marks 74B (74Lc2) in street mode.

The main scale marks 72A and 72C are displayed to be recognizable in track mode. The main scale mark 72B is not displayed to be recognizable in track mode. The auxiliary scale marks 74A (74Lc1), 74Lt, and 74B (74Lc2) are displayed in track mode. In track mode, the main scale mark 72A, auxiliary scale marks 74A (74Lc1), auxiliary scale mark 74Lt, auxiliary scale marks 74B (74Lc2), and main scale mark 72C are arranged in this order. In track mode, therefore, the auxiliary scale marks 74A (74Lc1), 74Lt, and 74B (74Lc2) are displayed between the main scale marks 72A and 72C. The total number of auxiliary scale marks 74A (74Lc1), 74Lt, and 74B (74Lc2) is a divisor of 1000. The rider P can, therefore, accurately and easily grasp values or quantities meant by the auxiliary scale marks 74A (74Lc1), 74Lt, and 74B (74Lc2) in track mode.

The number of auxiliary scale mark 74Lt is one. Thus, the number of auxiliary scale mark 74Lt is small. This can simplify the construction of the scale area 71.

The number of auxiliary scale marks 74A (74Lc1) is four. The number of auxiliary scale marks 74B (74Lc2) is five. The number of auxiliary scale mark 74Lt is one. Thus, the total number of auxiliary scale marks 74A (74Lc1), 74Lt, and 74B (74Lc2) is 10. Here, each of 4, 5, and 10 is a divisor of 1000. The rider P can, therefore, accurately and easily grasp values or quantities meant by the auxiliary scale marks 74A (74Lc1) and auxiliary scale marks 74B (74Lc2) in street mode. Further, the rider P can accurately and easily grasp values or quantities meant by the auxiliary scale marks 74A (74Lc1), 74Lt, and 74B (74Lc2) in track mode.

The scale area 71 has scale mark segments 101. The scale mark segments 101 include scale mark segments 104A, 104Lt, and 104B. The scale mark segment 104A is located in the positions of auxiliary scale marks 74A (74Lc1). The scale mark segment 104Lt is located in the position of auxiliary scale mark 74Lt. The scale mark segment 104B is located in the positions of auxiliary scale marks 74B (74Lc2). The scale mark segments 104A, 104Lt, and 104B can, therefore, conveniently display the auxiliary scale marks 74A (74Lc1), 74Lt, and 74B (74Lc2). Further, the scale area 71 displays the main scale marks 72A-72C to be recognizable by means of the scale mark segments 104A, 104Lt, and 104B. Consequently, the number of scale mark segments 101 used to display the main scale marks 72A-72C and auxiliary scale marks 74A (74Lc1), 74Lt, and 74B (74Lc2) is three, which is relatively few. The display device 31 can, therefore, be constructed at further reduced cost.

This invention is not limited to the foregoing embodiment, but may be modified as follows:
(1) In the foregoing embodiment, the main scale marks 72 are areas in the non-display state. The invention is not limited to this. The main scale marks 72 may be areas in the display state. In this modified embodiment, the main scale marks 72 preferably adjoin areas in the non-display state. In this modified embodiment, the scale area 71 preferably has areas in the non-display state which separate the main scale marks 72 and auxiliary scale marks 74. In this modified embodiment, the scale area 71 preferably has areas in the non-display state which separate the main scale marks 72 and red zone lines 76.
(2) In the foregoing embodiment, the number area 81 does not display the scale numbers 88 in positions corresponding to certain of the main scale marks 72 displayed in the scale area 71 in street mode. The invention is not limited to this. The number area 81 may display the scale numbers 88 in positions corresponding to all the main scale marks 72 displayed in the scale area 71 in street mode. In the foregoing embodiment, the number area 81 does not display the scale numbers 88 in positions corresponding to certain of the main scale marks 72 displayed in the scale area 71 in track mode. The invention is not limited to this. The number area 81 may display the scale numbers 88 in positions corresponding to all the main scale marks 72 displayed in the scale area 71 in track mode.
(3) In the foregoing embodiment, the number of variable areas 83 included in the common number area 82 is four. The invention is not limited to this. The number of variable areas 83 included in the common number area 82 may be three, five or more.
(4) In the foregoing embodiment, the variable area 83D corresponds to the first variable area. That is, the number of variable area 83 which corresponds to the first variable area is one. The invention is not limited to this. The number of variable areas 83 which correspond to the first variable area may be two or more.
(5) In the foregoing embodiment, the variable areas 83A-83C correspond to the second variable areas. That is, the number of variable areas 83 which correspond to the second variable areas is three. The invention is not limited to this. The number of variable areas 83 which correspond to the second variable areas may be one, two, or four or more.
(6) The foregoing embodiment specifically exemplifies the numbers of auxiliary scale marks 74Lc1, 74Lt, and 74Lc2. The invention is not limited to this. The numbers of auxiliary scale marks 74Lc1, 74Lt, and 74Lc2 may be varied as appropriate. In the foregoing embodiment, the number of auxiliary scale mark 74Lt is one. The invention is not limited to this. The number of auxiliary scale marks 74Lt may be two or more. In the foregoing embodiment, the number of auxiliary scale marks 74Lc1 is four. The invention is not limited to this. The number of auxiliary scale marks 74Lc1 may be one or more. In the foregoing embodiment, the number of auxiliary scale marks 74Lc2 is five. The invention is not limited to this. The number of auxiliary scale marks 74Lc2 may be one or more.
(7) In the foregoing embodiment, the number of auxiliary scale marks 74Lc1 (74A) is four, and the number of auxiliary scale marks 74Lc2 (74B) is five. The invention is not limited to this. The number of auxiliary scale marks 74Lc1 (74A) may be five, and the number of auxiliary scale marks 74Lc2 (74B) may be four.
(8) In the foregoing embodiment, the number of scale mark segments 101 included in the scale area 71 is 14. The invention is not limited to this. The number of scale mark segments 101 included in the scale area 71 can be reduced further. A plurality of scale mark segments 101 having a common switching pattern of the display state and non-display state may be integrated into one scale mark segment. For example, the scale mark segments 104A-104K, 106A and 106B are all in the display state in both street mode and track mode. So the scale mark segments 104A-104K, 106A and 106B may be integrated into one scale mark segment 101 (referred as scale mark segment 101c for convenience). This can reduce the number of scale mark segments 101 included in the scale area 71 to two (specifically, scale mark segments 101c and 104Lt).
(9) In the foregoing embodiment, the number of number segments 111 included in the number area 81 is 19. The invention is not limited to this. The number of number segments 111 included in the number area 81 can be reduced further. A plurality of number segments 111 having a common switching pattern of the display state and non-display state may be integrated into one number segment. For example, the number segments 113Ac, 113Bc, 113Cc, 113Dc, and 114A-114C are all in the display state in both street mode and track mode. So the number segments 113Ac, 113Bc, 113Cc, 113Dc, and 114A-114C may be integrated into one number segment 111 (referred to as number segment 111c for convenience). The number segments 113As, 113Ds, and 116A-116F are all in the display state in street mode and in the non-display state in track mode. So the number segments 113As, 113Ds, and 116A-116F may be integrated into one number segment 111 (referred to as number segment 111s for convenience). The number segments 113Bt, 113Ct, 113Dt, and 117 are in the display state in track mode and in the non-display state in street mode. So the number segments 113Bt, 113Ct, 113Dt, and 117 may be integrated into one number segment 111 (referred to as number segment 111t for convenience). This can reduce the number of number segments 111 included in the number area 81 to three (specifically, number segments 111c, 111s, and 111t).
(10) In the foregoing embodiment, the scale mark segments 101 do not display the scale numbers 88, and the number segments 111 do not display the main scale marks 72, auxiliary scale rows 73, or red zone lines 76. The invention is not limited to this. The main scale marks 72, auxiliary scale rows 73, red zone lines 76, and scale numbers 88 may be displayed by means of the same segments. This can reduce the total number of segments included in the scale area 71 and number area 81.
(11) In the foregoing embodiment, the number of auxiliary scale rows 73 is 10 or 11. The invention is not limited to this. The number of auxiliary scale rows 73 may be one or more. In the foregoing embodiment, the number of main scale marks 72 located in the positions adjoining the ends of the auxiliary scale rows 73 is 11 or 12. The invention is not limited to this. The number of main scale marks 72 located in the positions adjoining the ends of the auxiliary scale rows 73 may be two or more. That is, at least two or more main scale marks 72 may be located in the positions adjoining the ends of the auxiliary scale rows 73. In the foregoing embodiment, certain of the main scale marks 72 are located in the positions adjoining the ends of the auxiliary scale rows 73. The invention is not limited to this. All the main scale marks 72 may be located in the positions adjoining to the ends of the auxiliary scale rows 73.
(12) In the foregoing embodiment, the ECU 48 does not perform the function of the display controller 47. The invention is not limited to this. The ECU 48 may perform at least part of the function of the display controller 47.
(13) In the foregoing embodiment, the straddled vehicle 1 has been illustrated as an example of street type vehicles. The invention is not limited to this. The straddled vehicle 1 may be changed to vehicles of other types, such as the sport type or a vehicle for irregular grounds (for example, All-Terrain Vehicle (ATV)).
(14) In the foregoing embodiment, the number of front wheels 11 of the straddled vehicle 1 is one. The invention is not limited to this. The number of front wheels 11 of the straddled vehicle 1 may be changed to two. In the foregoing embodiment, the number of rear wheels 22 of the straddled vehicle 1 is one. The invention is not limited to this. The number of rear wheels 22 of the straddled vehicle 1 may be changed to two.
(15) In the foregoing embodiment, the engine (internal combustion engine) 13 has been illustrated as power source. The invention is not limited to this. For example, the straddled vehicle 1 may have an electric motor in addition to the engine 13 as power source. For example, the straddled vehicle 1 may have an electric motor as power source instead of the engine 13.

The foregoing embodiment and each of the modified embodiments described in paragraphs (1) to (15) above may be further varied as appropriate by replacing or combining their constructions with the constructions of the other modified embodiments.

It will be appreciated that the embodiments of the present invention hereinbefore described are given by way of example only, and are not meant to be limiting of the scope of the invention in any way.

It will be appreciated that the term "straddled vehicle" or "straddled motor vehicle" used herein, and as used in the art, is/are meant to include the following terms also used in the art:
straddle vehicle, straddle-type vehicle, saddle-ride type vehicle, saddle-straddling type vehicle, and includes: motorcycles and motorbikes, as well as motor tricycles and All Terrain Vehicles (ATV's).

## Claims

1. A display device (31) for use on a straddled vehicle (1), the device comprising a liquid crystal screen (41), wherein:
the liquid crystal screen (41) comprises:
a scale area (71) for displaying a plurality of main scale marks (72), for example to be recognizable;
a number area (81) for displaying scale numbers (88); and
a vehicle information area (91) for displaying along the main scale marks (72) vehicle information (92) concerning a state(s) of the straddled vehicle (1);
the liquid crystal screen (41) being capable of displaying the main scale marks (72), the scale numbers (88), and the vehicle information (92) switched between a first mode and a second mode, respectively;
the number of main scale marks (72) displayed in the first mode being larger than the number of main scale marks (72) displayed in the second mode;
the scale area (71) in the second mode comprising a part of longer distance (D1, D2, D3) between the main scale marks (72) than in the scale area (71) in the first mode;
the number area (81) in the first mode displaying the scale numbers (88) in positions corresponding to at least two of the main scale marks (72) displayed in the scale area (71) in the first mode, and in the second mode displaying the scale numbers (88) in positions corresponding to at least two of the main scale marks (72) displayed in the scale area (71) in the second mode;
the vehicle information area (91) in the first mode displaying the vehicle information (92) with reference to the main scale marks (72) displayed in the scale area (71) and the scale numbers (88) displayed in the number area (81) in the first mode, and in the second mode displaying the vehicle information (92) with reference to the main scale marks (72) displayed in the scale area (71) and the scale numbers (88) displayed in the number area (81) in the second mode;
the number area (81) comprising a plurality of number segments (111) switchable between a display state and a non-display state;
the number area (81) displaying the scale numbers (88) by means of the number segments (111);
the number area (81) comprising a common number area (82) for displaying the scale numbers (88) in the same positions in both the first mode and the second mode;
the common number area (82) comprising at least three variable areas (83) for switching between, and displaying, the scale numbers (88) in the first mode, and the scale numbers (88) in the second mode, different from one another but in the same positions;
at least one of the variable areas (83) being a first variable area (83D) for switching between, and displaying, the scale numbers (88) in the first mode, and the scale numbers (88) in the second mode, different from one another but in the same position, by means of three number segments (111); and
at least one of the variable areas (83) excluding the first variable area (83D) being a second variable area (83A, 83B, 83C) for switching between, and displaying, the scale numbers (88) in the first mode, and the scale numbers (88) in the second mode, different from one another but in the same position, by means of two number segments (111);
wherein:
each of the variable areas (83) comprises, as the number segments (111):
one common number segment (113Ac, 113Bc, 113Cc, 113Dc); and
at least one of one first number segment (113As, 113Ds) and one second number segment (113Bt, 113Ct, 113Dt);
the common number segment (113Ac, 113Bc, 113Cc, 113Dc) being located in a common part (89Ac, 89Bc, 89Cc, 89Dc) of a first scale number (88A1, 88B1, 88C1, 88D1) which is a scale number (88) displayed in the variable area (83) in the first mode and a second scale number (88A2, 88B2, 88C2, 88D2) which is a scale number (88) displayed in the variable area (83) in the second mode, the common number segment (113Ac, 113Bc, 113Cc, 113Dc) being in the display state in both the first mode and the second mode;
the first number segment (113As, 113Ds) being located in a first part (89As, 89Ds) included in the first scale number (88A1, 88D1) and not included in the second scale number (88A2, 88D2), the first number segment (113As, 113Ds) being in the display state in the first mode and in the non-display state in the second mode;
the second number segment (113Bt, 113Ct, 113Dt) being located in a second part (89Bt, 89Ct, 89Dt) included in the second scale number (88B2, 88C2, 88D2) and not included in the first scale number (88B1, 88C1, 88D1), the second number segment (113Bt, 113Ct, 113Dt) being in the display state in the second mode and in the non-display state in the first mode; **characterised in that**
the common number area (82) comprises two or more constant areas (84) for displaying the same scale numbers (88) in the same position in both the first mode and the second mode, the constant areas (84) displaying the scale numbers (88) in both the first mode and the second mode by means of one number segment (111).

2. The display device (31) according to any one of claim 1, wherein a minimum of the scale numbers (88) displayed in the second mode is larger than a minimum of the scale numbers (88) displayed in the first mode.

3. The display device (31) according to claim 1 or 2, wherein:
the scale area (71) has a plurality of scale mark segments (101) switchable between the display state and the non-display state;
the scale area (71) displaying the main scale marks (72) to be recognizable by means of the scale mark segments (101).

4. The display device (31) according to any one of claims 1 to 3, wherein:
the scale area (71) further displays a plurality of auxiliary scale marks (74);
the scale area (71) is capable of displaying the auxiliary scale marks (74) to be switchable between the first mode and the second mode; and
the number of the auxiliary scale marks (74) displayed in the first mode is smaller than the number of the auxiliary scale marks (74) displayed in the second mode.

5. The display device (31) according to claim 4, wherein:
the number of the auxiliary scale marks (74) located between two adjacent main scale marks (72) in the first mode is a divisor of 1000; and
the number of the auxiliary scale marks (74) located between two adjacent main scale marks (72) in the second mode is a divisor of 1000.

6. The display device (31) according to claim 4 or 5, wherein:
the scale area (71) displays auxiliary scale rows (73), each of which is a set of at least two auxiliary scale marks (74) arranged at equal intervals in a row; and
at least two of the main scale marks (72) are located in positions adjoining ends of the auxiliary scale row (73).

7. The display device (31) according to claim 6, wherein;
the auxiliary scale marks (74) are located in areas in the display state; and
the main scale marks (72) are located in areas in the non-display state.

8. The display device (31) according to any one of claims 4 to 7, wherein:
the main scale marks (72) comprise:
one first main scale mark (72A) displayed to be recognizable in the first mode and the second mode;
one second main scale mark (72B) displayed to be recognizable in the first mode, and not displayed to be recognizable in the second mode; and
one third main scale mark (72C) displayed to be recognizable in the first mode and the second mode;
the auxiliary scale marks (74) comprise:
at least one first auxiliary scale mark (74A, 74Lc1) displayed in the first mode and the second mode;
at least one second auxiliary scale mark (74Lt) not displayed in the first mode, but displayed in the second mode;
at least one third auxiliary scale mark (74B, 74Lc2) displayed in the first mode and the second mode;
in the first mode, the first main scale mark (72A), the first auxiliary scale mark (74A, 74Lc1), the second main scale mark (72B), the third auxiliary scale mark (74B, 74Lc2), and the third main scale mark (72C) are arranged in this order;
in the second mode, the first main scale mark (72A), the first auxiliary scale mark (74A, 74Lc1), the second auxiliary scale mark (74Lt), the third auxiliary scale mark (74B, 74Lc2), and the third main scale mark (72C) are arranged in this order;
the number of the first auxiliary scale mark (74A, 74Lc1) is a divisor of 1000;
the number of the third auxiliary scale mark (74B, 74Lc2) is a divisor of 1000; and
a sum total of the number of the first auxiliary scale mark (74A, 74Lc1), the number of the second auxiliary scale mark (74Lt), and the number of the third auxiliary scale mark (74B, 74Lc2) is a divisor of 1000.

9. The display device (31) according to claim 8, wherein the number of the second auxiliary scale mark (74Lt) is one.

10. The display device (31) according to claim 9, wherein:
the number of the first auxiliary scale mark (74A, 74Lc1) is one of four and five; and
the number of the third auxiliary scale mark (74B, 74Lc2) is the other of four and five.

11. The display device (31) according to any one of claims 8 to 10, wherein:
the scale area (71) comprises:
one first scale mark segment (104A) located in position of the first auxiliary scale mark (74A, 74Lc1) to be switchable between the display state and the non-display state;
one second scale mark segment (104Lt) located in a position of the second auxiliary scale mark (74Lt) to be switchable between the display state and the non-display state; and
one third scale mark segment (104B) located in the position of the third auxiliary scale mark (74B, 74Lc2) to be switchable between the display state and the non-display state;
the scale area (71) displaying the first main scale mark (72A), the second main scale mark (72B), and the third main scale mark (72C) to be recognizable by means of the first scale mark segment (104A), the second scale mark segment (104Lt), and the third scale mark segment (104B).

12. The display device (31) according to any one of claims 1 to 11, wherein the vehicle information (92) is information concerning rotation speed of an engine (13) of a/the straddled vehicle (1).

13. A straddled vehicle (1) comprising a display device (31) as claimed in any of claims 1 to 12.

## Patentansprüche

1. Anzeigevorrichtung (31) zur Verwendung an einem Reitsitzfahrzeug (1), wobei die Vorrichtung einen Flüssigkristall-Bildschirm (41) umfasst, wobei:
der Flüssigkristall-Bildschirm (41) Folgendes umfasst:
einen Skalenbereich (71) zum Anzeigen einer Vielzahl von Hauptskalenmarkierungen (72), zum Beispiel, damit sie erkennbar sind;
einen Zahlenbereich (81) zum Anzeigen von Skalenzahlen (88); und
einen Fahrzeuginformationsbereich (91) zum Anzeigen von Fahrzeuginformationen (92), die einen oder mehrere Zustände des Reitsitzfahrzeugs (1) betreffen, entlang der Hauptskalenmarkierungen (72);
der Flüssigkristall-Bildschirm (41) dazu in der Lage ist, die Hauptskalenmarkierungen (72), die Skalenzahlen (88) und die Fahrzeuginformationen (92), jeweils umgeschaltet zwischen einem ersten Modus und einem zweiten Modus, anzuzeigen;
wobei die Anzahl von Hauptskalenmarkierungen (72), die in dem ersten Modus angezeigt werden, größer ist als die Anzahl von Hauptskalenmarkierungen (72), die in dem zweiten Modus angezeigt werden;
wobei der Skalenbereich (71) in dem zweiten Modus einen Teil mit größerem Abstand (D1, D2, D3) zwischen den Hauptskalenmarkierungen (72) als in dem Skalenbereich (71) in dem ersten Modus umfasst;
wobei der Zahlenbereich (81) in dem ersten Modus die Skalenzahlen (88) in Positionen anzeigt, die mindestens zwei der Hauptskalenmarkierungen (72) entsprechen, die in dem Skalenbereich (71) in dem ersten Modus angezeigt werden, und in dem zweiten Modus die Skalenzahlen (88) in Positionen anzeigt, die mindestens zwei der Hauptskalenmarkierungen (72) entsprechen, die in dem Skalenbereich (71) in dem zweiten Modus angezeigt werden;
wobei der Fahrzeuginformationsbereich (91) in dem ersten Modus die Fahrzeuginformationen (92) unter Bezugnahme auf die Hauptskalenmarkierungen (72), die in dem Skalenbereich (71) angezeigt werden, und die Skalenzahlen (88), die in dem Zahlenbereich (81) in dem ersten Modus angezeigt werden, anzeigt und in dem zweiten Modus die Fahrzeuginformationen (92) unter Bezugnahme auf die Hauptskalenmarkierungen (72), die in dem Skalenbereich (71) angezeigt werden, und die Skalenzahlen (88), die in dem Zahlenbereich (81) in dem zweiten Modus angezeigt werden, anzeigt;
wobei der Zahlenbereich (81) eine Vielzahl von Zahlensegmenten (111) umfasst, die zwischen einem Anzeigezustand und einem Nichtanzeigezustand umschaltbar sind;
wobei der Zahlenbereich (81) die Skalenzahlen (88) anhand der Zahlensegmente (111) anzeigt;
wobei der Zahlenbereich (81) einen gemeinsamen Zahlenbereich (82) zum Anzeigen der Skalenzahlen (88) in denselben Positionen in sowohl dem ersten Modus als auch dem zweiten Modus umfasst;
wobei der gemeinsame Zahlenbereich (82) mindestens drei veränderliche Bereiche (83) zum Umschalten zwischen den und Anzeigen der Skalenzahlen (88) in dem ersten Modus und der Skalenzahlen (88) in dem zweiten Modus, unterschiedlich voneinander, aber in denselben Positionen, umfasst;
wobei mindestens einer von den veränderlichen Bereichen (83) ein erster veränderlicher Bereich (83D) zum Umschalten zwischen den und Anzeigen der Skalenzahlen (88) in dem ersten Modus und der Skalenzahlen (88) in dem zweiten Modus, unterschiedlich voneinander, aber in derselben Position, anhand von drei Zahlensegmenten (111), ist; und
wobei mindestens einer von den veränderlichen Bereichen (83) außer dem ersten veränderlichen Bereich (83D) ein zweiter veränderlicher Bereich (83A, 83B, 83C) zum Umschalten zwischen den und Anzeigen der Skalenzahlen (88) in dem ersten Modus und der Skalenzahlen (88) in dem zweiten Modus, unterschiedlich voneinander, aber in derselben Position, anhand von zwei Zahlensegmenten (111) ist;
wobei:
jeder von den veränderlichen Bereichen (83), als die Zahlensegmente (111), Folgendes umfasst:
ein gemeinsames Zahlensegment (113Ac, 113Bc, 113Cc, 113Dc); und
mindestens eines von einem ersten Zahlensegment (113As, 113Ds) und einem zweiten Zahlensegment (113Bt, 113Ct, 113Dt),
wobei das gemeinsame Zahlensegment (113Ac, 113Bc, 113Cc, 113Dc) in einem gemeinsamen Teil (89Ac, 89Bc, 89Cc, 89Dc) einer ersten Skalenzahl (88A1, 88B1, 88C1, 88D1), die eine Skalenzahl (88) ist, die in dem veränderlichen Bereich (83) in dem ersten Modus angezeigt wird, und einer zweiten Skalenzahl (88A2, 88B2, 88C2, 88D2), die eine Skalenzahl (88) ist, die in dem veränderlichen Bereich (83) in dem zweiten Modus angezeigt wird, angeordnet ist, wobei sich das gemeinsame Zahlensegment (113 Ac, 113Bc, 113Cc, 113Dc) in sowohl dem ersten Modus als auch dem zweiten Modus in dem Anzeigezustand befindet;
wobei das erste Zahlensegment (113As, 113Ds) in einem ersten Teil (89As, 89Ds) angeordnet ist, der in der ersten Skalenzahl (88A1, 88D1) eingeschlossen ist und nicht in der zweiten Skalenzahl (88A2, 88D2) eingeschlossen ist, wobei sich das erste Zahlensegment (113As, 113Ds) in dem ersten Modus in dem Anzeigezustand und in dem zweiten Modus in dem Nichtanzeigezustand befindet;
wobei das zweite Zahlensegment (113Bt, 113Ct, 113Dt) in einem zweiten Teil (89Bt, 89Ct, 89Dt) angeordnet ist, der in der zweiten Skalenzahl (88B2, 88C2, 88D2) eingeschlossen ist und nicht in der ersten Skalenzahl (88B1, 88C1, 88D1) eingeschlossen ist, wobei sich das zweite Zahlensegment (113Bt, 113Ct, 113Dt) in dem zweiten Modus in dem Anzeigezustand und in dem ersten Modus in dem Nichtanzeigezustand befindet; **dadurch gekennzeichnet, dass**
der gemeinsame Zahlenbereich (82) zwei oder mehr konstante Bereiche (84) zum Anzeigen derselben Skalenzahlen (88) in derselben Position in sowohl dem ersten Modus als auch dem zweiten Modus umfasst, wobei die konstanten Bereiche (84) die Skalenzahlen (88) in sowohl dem ersten Modus als auch dem zweiten Modus anhand eines Zahlensegments (111) anzeigen.

2. Anzeigevorrichtung (31) nach einem der Ansprüche 1, wobei ein Minimum der Skalenzahlen (88), die in dem zweiten Modus angezeigt werden, größer ist als ein Minimum der Skalenzahlen (88), die in dem ersten Modus angezeigt werden.

3. Anzeigevorrichtung (31) nach Anspruch 1 oder 2, wobei:
der Skalenbereich (71) eine Vielzahl von Skalenmarkierungssegmenten (101) aufweist, die zwischen dem Anzeigezustand und dem Nichtanzeigezustand umschaltbar sind;
der Skalenbereich (71) die Hauptskalenmarkierungen (72) anhand der Skalenmarkierungssegmente (101) anzeigt, damit sie erkennbar sind.

4. Anzeigevorrichtung (31) nach einem der Ansprüche 1 bis 3, wobei:
der Skalenbereich (71) ferner eine Vielzahl von Nebenskalenmarkierungen (74) anzeigt;
der Skalenbereich (71) dazu in der Lage ist, die Nebenskalenmarkierungen (74) anzuzeigen, damit sie zwischen dem ersten Modus und dem zweiten Modus umschaltbar sind; und
die Anzahl der Nebenskalenmarkierungen (74), die in dem ersten Modus angezeigt werden, kleiner ist als die Anzahl der Nebenskalenmarkierungen (74), die in dem zweiten Modus angezeigt werden.

5. Anzeigevorrichtung (31) nach Anspruch 4, wobei:
die Anzahl der Nebenskalenmarkierungen (74), die in dem ersten Modus zwischen zwei benachbarten Hauptskalenmarkierungen (72) angeordnet sind, ein Divisor von 1 000 ist und
die Anzahl der Nebenskalenmarkierungen (74), die in dem zweiten Modus zwischen zwei benachbarten Hauptskalenmarkierungen (72) angeordnet sind, ein Divisor von 1 000 ist.

6. Anzeigevorrichtung (31) nach Anspruch 4 oder 5, wobei:
der Skalenbereich (71) Nebenskalenreihen (73) anzeigt, deren jede ein Satz von mindestens zwei Nebenskalenmarkierungen (74) ist, die in gleichen Abständen in einer Reihe angeordnet sind; und
mindestens zwei der Hauptskalenmarkierungen (72) in Positionen angeordnet sind, die sich an Enden der Nebenskalenreihe (73) anschließen.

7. Anzeigevorrichtung (31) nach Anspruch 6, wobei:
die Nebenskalenmarkierungen (74) in Bereichen in dem Anzeigezustand angeordnet sind; und
die Hauptskalenmarkierungen (72) in Bereichen in dem Nichtanzeigezustand angeordnet sind.

8. Anzeigevorrichtung (31) nach einem der Ansprüche 4 bis 7, wobei:
die Hauptskalenmarkierungen (72) Folgendes umfassen:
eine erste Hauptskalenmarkierung (72A), die in dem ersten Modus und dem zweiten Modus angezeigt wird, damit sie erkennbar ist;
eine zweite Hauptskalenmarkierung (72B), die in dem ersten Modus angezeigt wird, damit sie erkennbar ist, und in dem zweiten Modus nicht angezeigt wird, damit sie erkennbar ist; und
eine dritte Hauptskalenmarkierung (72C), die in dem ersten Modus und dem zweiten Modus angezeigt wird, damit sie erkennbar ist;
die Nebenskalenmarkierungen (74) Folgendes umfassen:
mindestens eine erste Nebenskalenmarkierung (74A, 74Lc1), die in dem ersten Modus und dem zweiten Modus angezeigt wird;
mindestens eine zweite Nebenskalenmarkierung (74Lt), die in dem ersten Modus nicht angezeigt wird, aber in dem zweiten Modus angezeigt wird; und
mindestens eine dritte Nebenskalenmarkierung (74B, 74Lc2), die in dem ersten Modus und dem zweiten Modus angezeigt wird;
in dem ersten Modus die erste Hauptskalenmarkierung (72A), die erste Nebenskalenmarkierung (74A, 74Lc1), die zweite Hauptskalenmarkierung (72B), die dritte Nebenskalenmarkierung (74B, 74Lc2) und die dritte Hauptskalenmarkierung (72C) in dieser Reihenfolge angeordnet sind;
in dem zweiten Modus die erste Hauptskalenmarkierung (72A), die erste Nebenskalenmarkierung (74A, 74Lc1), die zweite Nebenskalenmarkierung (74Lt), die dritte Nebenskalenmarkierung (74B, 74Lc2) und die dritte Hauptskalenmarkierung (72C) in dieser Reihenfolge angeordnet sind;
die Anzahl der ersten Nebenskalenmarkierung (74A, 74Lc1) ein Divisor von 1 000 ist;
die Anzahl der dritten Nebenskalenmarkierung (74B, 74Lc2) ein Divisor von 1 000 ist; und
eine Gesamtsumme der Anzahl der ersten Nebenskalenmarkierung (74A, 74Lc1), der Anzahl der zweiten Nebenskalenmarkierung (74Lt) und der Anzahl der dritten Nebenskalenmarkierung (74B, 74Lc2) ein Divisor von 1 000 ist.

9. Anzeigevorrichtung (31) nach Anspruch 8, wobei die Anzahl der zweiten Nebenskalenmarkierung (74Lt) eins ist.

10. Anzeigevorrichtung (31) nach Anspruch 9, wobei:
die Anzahl der ersten Nebenskalenmarkierung (74A, 74Lc1) das eine von vier und fünf ist; und
die Anzahl der dritten Nebenskalenmarkierung (74B, 74Lc2) das andere von vier und fünf ist.

11. Anzeigevorrichtung (31) nach einem der Ansprüche 8 bis 10, wobei:
der Skalenbereich (71) Folgendes umfasst:
ein erstes Skalenmarkierungssegment (104A), das in der Position der ersten Nebenskalenmarkierung (74A, 74Lc1) angeordnet ist, um zwischen dem Anzeigezustand und dem Nichtanzeigezustand umschaltbar zu sein;
ein zweites Skalenmarkierungssegment (104Lt), das in einer Position der zweiten Nebenskalenmarkierung (74Lt) angeordnet ist, um zwischen dem Anzeigezustand und dem Nichtanzeigezustand umschaltbar zu sein; und
ein drittes Skalenmarkierungssegment (104B), das in der Position der dritten Nebenskalenmarkierung (74B, 74Lc2) angeordnet ist, um zwischen dem Anzeigezustand und dem Nichtanzeigezustand umschaltbar zu sein;
wobei der Skalenbereich (71) die erste Hauptskalenmarkierung (72A), die zweite Hauptskalenmarkierung (72B) und die dritte Hauptskalenmarkierung (72C) anhand des ersten Skalenmarkierungssegments (104A), des zweiten Skalenmarkierungssegments (104Lt) und des dritten Skalenmarkierungssegments (104B) anzeigt, damit sie erkennbar sind.

12. Anzeigevorrichtung (31) nach einem der Ansprüche 1 bis 11, wobei die Fahrzeuginformationen (92) Informationen sind, die eine Umdrehungsgeschwindigkeit eines Motors (13) eines/des Reitsitzfahrzeugs (1) betreffen.

13. Reitsitzfahrzeug (1), das eine Anzeigevorrichtung (31) nach einem der Ansprüche 1 bis 12 umfasst.

## Revendications

1. Dispositif d'affichage (31) destiné à être utilisé sur un véhicule à califourchon (1), le dispositif comprenant un écran à cristaux liquides (41), dans lequel :
l'écran à cristaux liquides (41) comprend :
une zone d'échelle (71) pour afficher une pluralité de graduations principales (72), par exemple pour être reconnaissables ;
une zone de chiffres (81) pour afficher les chiffres d'échelle (88) ; et
une zone d'informations sur le véhicule (91) pour afficher le long des graduations principales (72) des informations sur le véhicule (92) concernant un ou plusieurs états du véhicule à califourchon (1) ;
l'écran à cristaux liquides (41) est capable d'afficher les graduations principales (72), les chiffres d'échelle (88) et les informations sur le véhicule (92) en passant respectivement d'un premier mode à un deuxième mode ;
le nombre de graduations principales (72) affichées dans le premier mode étant supérieur au nombre de graduations principales (72) affichées dans le deuxième mode ;
la zone d'échelle (71) dans le deuxième mode comprenant une partie de distance (D1, D2, D3) plus longue entre les graduations principales (72) que dans la zone d'échelle (71) dans le premier mode ;
la zone de chiffres (81) dans le premier mode affichant les chiffres d'échelle (88) dans des positions correspondant à au moins deux des graduations principales (72) affichées dans la zone d'échelle (71) dans le premier mode, et dans le deuxième mode affichant les chiffres d'échelle (88) dans des positions correspondant à au moins deux des graduations principales (72) affichées dans la zone d'échelle (71) dans le deuxième mode ;
la zone d'informations sur le véhicule (91) dans le premier mode affichant les informations sur le véhicule (92) en référence aux graduations principales (72) affichées dans la zone d'échelle (71) et aux chiffres d'échelle (88) affichés dans la zone de chiffres (81) dans le premier mode, et dans le deuxième mode affichant les informations sur le véhicule (92) en référence aux graduations principales (72) affichées dans la zone d'échelle (71) et aux chiffres d'échelle (88) affichés dans la zone de chiffres (81) dans le deuxième mode ;
la zone de chiffres (81) comprenant une pluralité de segments de chiffres (111) commutables entre un état d'affichage et un état de non-affichage ;
la zone de chiffres (81) affichant les chiffres d'échelle (88) au moyen des segments de chiffres (111) ;
la zone de chiffres (81) comprenant une zone commune de chiffres (82) permettant d'afficher les chiffres d'échelle (88) dans les mêmes positions à la fois dans le premier mode et dans le deuxième mode ;
la zone commune de chiffres (82) comprenant au moins trois zones variables (83) pour la commutation et l'affichage des chiffres d'échelle (88) dans le premier mode et des chiffres d'échelle (88) dans le deuxième mode, différents les uns des autres mais dans les mêmes positions ;
au moins une des zones variables (83) étant une première zone variable (83D) permettant de commuter et d'afficher les chiffres d'échelle (88) dans le premier mode et les chiffres d'échelle (88) dans le deuxième mode, différents les uns des autres mais dans la même position, au moyen de trois segments de chiffres (111) ; et
au moins une des zones variables (83) hormis la première zone variable (83D) étant une deuxième zone variable (83A, 83B, 83C) pour la commutation et l'affichage des chiffres d'échelle (88) dans le premier mode et des chiffres d'échelle (88) dans le deuxième mode, différents les uns des autres mais dans la même position, au moyen de deux segments de chiffres (111) ;
dans lequel :
chacune des zones variables (83) comprend, comme les segments de chiffres (111) :
un segment de chiffre commun (113Ac, 113Bc, 113Cc, 113Dc) ; et
au moins un parmi un premier segment de chiffre (113As, 113Ds) et un deuxième segment de chiffre (113Bt, 113Ct, 113Dt) ;
le segment de chiffre commun (113Ac, 113Bc, 113Cc, 113Dc) étant situé dans une partie commune (89Ac, 89Bc, 89Cc, 89Dc) d'un premier chiffre d'échelle (88A1, 88B1, 88C1, 88D1) qui est un chiffre d'échelle (88) affiché dans la zone variable (83) dans le premier mode et d'un deuxième chiffre d'échelle (88A2, 88B2, 88C2, 88D2) qui est un chiffre d'échelle (88) affiché dans la zone variable (83) dans le deuxième mode, le segment de chiffre commun (113Ac, 113Bc, 113Cc, 113Dc) étant à l'état d'affichage à la fois dans le premier mode et dans le deuxième mode ;
le premier segment de chiffre (113As, 113Ds) étant situé dans une première partie (89As, 89Ds) incluse dans le premier chiffre d'échelle (88A1, 88D1) et non incluse dans le deuxième chiffre d'échelle (88A2, 88D2), le premier segment de chiffre (113As, 113Ds) étant dans l'état d'affichage dans le premier mode et dans l'état de non-affichage dans le deuxième mode ;
le deuxième segment de chiffre (113Bt, 113Ct, 113Dt) étant situé dans une deuxième partie (89Bt, 89Ct, 89Dt) incluse dans le deuxième chiffre d'échelle (88B2, 88C2, 88D2) et non incluse dans le premier chiffre d'échelle (88B1, 88C1, 88D1), le deuxième segment de chiffre (113Bt, 113Ct, 113Dt) étant à l'état d'affichage dans le deuxième mode et à l'état de non-affichage dans le premier mode ; **caractérisé en ce que**
la zone commune de chiffres (82) comprend deux ou plusieurs zones constantes (84) pour afficher les mêmes chiffres d'échelle (88) dans la même position à la fois dans le premier mode et dans le deuxième mode, les zones constantes (84) affichant les chiffres d'échelle (88) à la fois dans le premier mode et dans le deuxième mode au moyen d'un segment de chiffre (111).

2. Dispositif d' affichage (31) selon l'une quelconque des revendications 1, dans lequel un minimum des chiffres d'échelle (88) affichés dans le deuxième mode est plus grand qu'un minimum des chiffres d'échelle (88) affichés dans le premier mode.

3. Dispositif d'affichage (31) selon la revendication 1 ou 2, dans lequel :
la zone d'échelle (71) comporte une pluralité de segments de graduation (101) commutables entre l'état d'affichage et l'état de non-affichage ;
la zone d'échelle (71) affichant les graduations principales (72) à reconnaître au moyen des segments de graduation (101).

4. Dispositif d'affichage (31) selon l'une quelconque des revendications 1 à 3, dans lequel :
la zone d'échelle (71) affiche en outre une pluralité de graduations auxiliaires (74) ;
la zone d'échelle (71) est capable d'afficher les graduations auxiliaires (74) pour être commutables entre le premier mode et le deuxième mode ; et
le nombre de graduations auxiliaires (74) affichées dans le premier mode est inférieur au nombre de graduations auxiliaires (74) affichées dans le deuxième mode.

5. Dispositif d'affichage (31) selon la revendication 4, dans lequel :
le nombre de graduations auxiliaires (74) situées entre deux graduations principales (72) adjacentes dans le premier mode est un diviseur de 1 000 ; et
le nombre de graduations auxiliaires (74) situées entre deux graduations principales (72) adjacentes dans le deuxième mode est un diviseur de 1 000.

6. Dispositif d'affichage (31) selon la revendication 4 ou 5, dans lequel :
la zone d'échelle (71) présente des rangées d'échelle auxiliaires (73), chacune étant un ensemble d'au moins deux graduations auxiliaires (74) disposées à intervalles égaux dans une rangée ; et
au moins deux des graduations principales (72) sont situées dans des positions adjacentes aux extrémités de la rangée d'échelle auxiliaire (73).

7. Dispositif d'affichage (31) selon la revendication 6, dans lequel :
les graduations auxiliaires (74) sont situées dans des zones en état d'affichage ; et
les graduations principales (72) sont situées dans des zones en état de non-affichage.

8. Dispositif d'affichage (31) selon l'une quelconque des revendications 4 à 7, dans lequel :
les graduations principales (72) comprennent :
une première graduation principale (72A) affichée pour être reconnaissable dans le premier mode et le deuxième mode ;
une deuxième graduation principale (72B) affichée pour être reconnaissable dans le premier mode, et non affichée pour être reconnaissable dans le deuxième mode ; et
une troisième graduation principale (72C) affichée pour être reconnaissable dans le premier mode et le deuxième mode ;
les graduations auxiliaires (74) comprennent :
au moins une première graduation auxiliaire (74A, 74Lc1) affichée dans le premier mode et le deuxième mode ;
au moins une deuxième graduation auxiliaire (74Lt) non affichée dans le premier mode, mais affichée dans le deuxième mode ;
au moins une troisième graduation auxiliaire (74B, 74Lc2) affichée dans le premier mode et le deuxième mode ;
dans le premier mode, la première graduation principale (72A), la première graduation auxiliaire (74A, 74Lc1), la deuxième graduation principale (72B), la troisième graduation auxiliaire (74B, 74Lc2) et la troisième graduation principale (72C) sont disposées dans cet ordre ;
dans le deuxième mode, la première graduation principale (72A), la première graduation auxiliaire (74A, 74Lc1), la deuxième graduation auxiliaire (74Lt), la troisième graduation auxiliaire (74B, 74Lc2) et la troisième graduation principale (72C) sont disposées dans cet ordre ;
le nombre de la première graduation auxiliaire (74A, 74Lc1) est un diviseur de 1 000 ;
le nombre de la troisième graduation auxiliaire (74B, 74Lc2) est un diviseur de 1 000 ; et
la somme totale du nombre de la première graduation auxiliaire (74A, 74Lc1), du nombre de la deuxième graduation auxiliaire (74Lt) et du nombre de la troisième graduation auxiliaire (74B, 74Lc2) est un diviseur de 1 000.

9. Dispositif d'affichage (31) selon la revendication 8, dans lequel le nombre de la deuxième graduation auxiliaire (74Lt) est un.

10. Dispositif d'affichage (31) selon la revendication 9, dans lequel :
le nombre de la première graduation auxiliaire (74A, 74Lc1) est l'un de quatre et cinq ; et
le nombre de la troisième graduation auxiliaire (74B, 74Lc2) est l'autre de quatre et cinq.

11. Dispositif d'affichage (31) selon l'une quelconque des revendications 8 à 10, dans lequel :
la zone d'échelle (71) comprend :
un premier segment de graduation (104A) situé en position de la première graduation auxiliaire (74A, 74Lc1) pour être commutable entre l'état d'affichage et l'état de non-affichage ;
un deuxième segment de graduation (104Lt) situé dans une position de la deuxième graduation auxiliaire (74Lt) pour être commutable entre l'état d'affichage et l'état de non-affichage ; et
un troisième segment de graduation (104B) situé dans la position de la troisième graduation auxiliaire (74B, 74Lc2) pour être commutable entre l'état d'affichage et l'état de non-affichage ;
la zone d'échelle (71) affichant la première graduation principale (72A), la deuxième graduation principale (72B) et la troisième graduation principale (72C) pour être reconnaissable au moyen du premier segment de graduation (104A), du deuxième segment de graduation (104Lt) et du troisième segment de graduation (104B).

12. Dispositif d'affichage (31) selon l'une quelconque des revendications 1 à 11, dans lequel les informations sur le véhicule (92) sont des informations concernant la vitesse de rotation d'un moteur (13) d'un/du véhicule à califourchon (1).

13. Véhicule à califourchon (1) comprenant un dispositif d'affichage (31) tel que revendiqué selon l'une quelconque des revendications 1 à 12.
